(19)

Europäisches
Patentamt
European
Patent Office
Office européen
des brevets

(11)     **EP 3 286 581 B1**

(12)                        **EUROPEAN PATENT SPECIFICATION**

(45) Date of publication and mention
of the grant of the patent:
**24.06.2020   Bulletin 2020/26**

(21) Application number: **16722803.0**

(22) Date of filing: **22.04.2016**

(51) Int Cl.:
***G01T 1/02*** *(2006.01)*

(86) International application number:
**PCT/EP2016/059107**

(87) International publication number:
**WO 2016/170175 (27.10.2016 Gazette 2016/43)**

(54) **PERSONAL DOSIMETER COMPRISING AT LEAST TWO IONIZING RADIATION DETECTORS**

PERSÖNLICHES DOSIMETER MIT MINDESTENS ZWEI DETEKTOREN FÜR IONISIERENDE
STRAHLUNG

DOSIMÈTRE PERSONNEL COMPRENANT AU MOINS DEUX DÉTECTEURS DE RAYONNEMENT
IONISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.04.2015   GB 201507060**

(43) Date of publication of application:
**28.02.2018   Bulletin 2018/09**

(73) Proprietor: **SCK CEN**
**1160 Brussels (BE)**

(72) Inventors:
• **VANHAVERE, Filip**
**2018 Antwerpen (BE)**
• **SALDARRIAGA VARGAS, Clarita**
**2400 Mol (BE)**
• **STRUELENS, Lara**
**3200 Aarschot (BE)**

(74) Representative: **DenK iP**
**Leuvensesteenweg 203**
**3190 Boortmeerbeek (BE)**

(56) References cited:
**US-A- 4 286 165     US-A- 4 465 936
US-A- 5 340 985**

• **Saldarriaga Vargas Clarita ET AL:
"Caractérisation de la dose efficace pour des
faisceaux de photons de basse énergie et l'effet
du port de vêtements plombés", Journées SFRP,
26 March 2014 (2014-03-26), pages 1-25,
XP055287362, Retrieved from the Internet:
URL:http://www.sfrp.asso.fr/medias/sfrp/do
cuments/S7b-Clarita_SALDARRIAGA_VARGAS
pptx .pdf [retrieved on 2016-07-11]**
• **H. JARVINEN ET AL: "Comparison of double
dosimetry algorithms for estimating the effective
dose in occupational dosimetry of interventional
radiology staff", RADIATION PROTECTION
DOSIMETRY., vol. 131, no. 1, 1 January 2008
(2008-01-01), pages 80-86, XP055287185, GB
ISSN: 0144-8420, DOI: 10.1093/rpd/ncn239 cited
in the application**

EP 3 286 581 B1

**Description**

**Field of the invention**

The invention relates to the field of radiation dosimetry. More specifically it relates to a personal whole-body dosimeter suitable for estimating the effective dose of a person exposed to ionizing radiation whilst wearing a radiation protection garment.

**Background of the invention**

Radiation dosimeters are ionizing radiation dosimetry devices for measuring an exposure to ionizing radiation. Personal dosimeters are such radiation dosimetry devices specifically adapted for monitoring radiation exposure of humans in human radiation protection, e.g. as opposed to dosimeters for measuring a radiation dose in medical applications, industrial processes or environmental monitoring. Personal dosimeters are typically used for estimating an ionizing radiation dose deposited in an individual carrying the device. Such personal dosimeters are known in the art to be attachable to the body or to the clothing of the user, in order to obtain a radiation measurement at a predetermined location on the body during the exposure.

Personal dosimeters may be known in the art that are specifically adapted for estimating a local radiation exposure, e.g. near the fingers or the eyes. However, embodiments of the present invention relate to the application of whole-body personal dosimetry. A personal whole-body dosimeter is specifically suitable for estimating a whole-body dose, e.g. an effective dose. Such estimation of a whole body dose can be particularly challenging when extrapolating from a measurement obtained from a single personal whole-body dosimeter worn at a specific location on the body.

Since an exposure of the human body to ionizing radiation implies a cumulative damage to the body and/or a cumulative health risk, e.g. proportional to the total radiation dose received, occupationally exposed persons, such as radiographers, nurses and doctors using X-ray medical imaging and/or radiotherapy equipment, can be required to wear a personal whole-body dosimeter in order to maintain a record of work-related ionizing radiation exposure.

For example, medical staff working in interventional radiology (IR) and interventional cardiology (IC) suites are exposed to scattered ionizing radiation from the patient. Protection garments like a lead apron and a thyroid collar are often worn as personal radiation protection (RP) equipment. For legal radiation protection purposes, these medical workers may be required to wear a personal dosimeter that can estimate a whole body dose, such as an effective dose, received during their work, in order to enable a comparison of the dose to a legal limit for occupational radiation exposure.

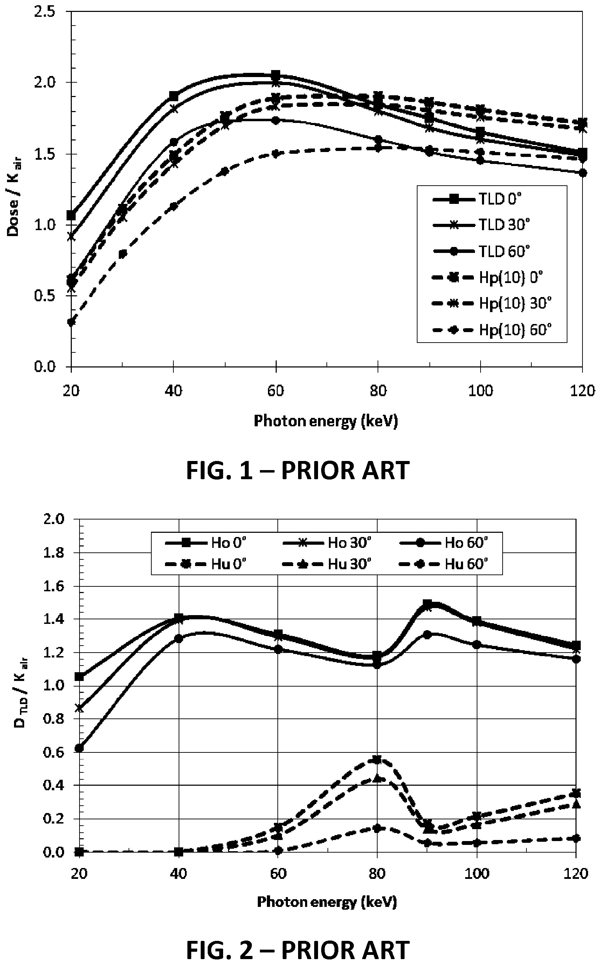

Conventionally, an effective dose may be estimated by a dose measurement obtained by a personal dosimeter designed for registering the personal dose equivalent *Hp(10).* However, in case of medical staff wearing radioprotective garments, the measurement of the *Hp(10)* quantity is not a good estimation of the effective dose. A typical energy dependence as well as angular dependence of the dose response, in terms of dose per air kerma, e.g. air kerma free-in-air, is shown in FIG. 1 for the personal dose equivalent *Hp(10)* in accordance with the standard set by ICRP publication 74 and for a simulated model of a personal dosimeter adapted for measuring *Hp(10)* based on a thermoluminescent detector, e.g. having a configuration similar to *Hp(10)* personal dosimeters known in the art.

Different methodologies have been proposed to estimate the effective dose when RP garments are used, like applying a correction factor to the dose of a standard Hp(10) dosimeter worn above RP garments, or the use of an algorithm combining the dose from two Hp(10) dosimeters: one worn above RP garments and the other one worn below; but it remains a difficult task to provide a good estimate of the effective dose under all possible exposure conditions. In theory, wearing two dosimeters gives better results, but this is not cost effective and may create operational problems.

FIG. 2 illustrates energy and angular dependence of the dose received by a simulated *Hp(10)* dosimeter under conditions similar to being worn over the lead apron and under conditions similar to being worn under the lead apron. The response of the simulated *Hp(10)* dosimeter *Hu* placed under a 0.5 mm lead shield shows the strong absorption of the shield over a wide energy range, indicative of the radioprotective effect of radioprotective garments. Note that also the response of the simulated *Hp(10)* dosimeter *Ho* placed over the 0.5 mm lead shield shows a clear increase in the lead K-edge spectral region above about 88 keV on the dose response due to backscatter effects.

In a publication by Järvinen et al., "Comparison of double dosimetry algorithms for estimating the effective dose in occupational dosimetry of interventional radiology staff," in Radiation Protection Dosimetry, vol. 131(1), various single dosimetry and double dosimetry algorithms known in the art are described.

In single dosimetry (SD) approaches known in the art, an effective dose $D_{SD}$ is obtained by applying a correction factor $\gamma$ to the dose $H_{over}$ registered by an *Hp(10)* dosimeter worn over the radioprotective garments, e.g. $D_{SD} = H_{over} / \gamma$. Järvinen et al. has reported values for the correction factor $\gamma$ between 5 and 33 corresponding to different single dosimetry algorithms known in the art, for estimating the effective dose under similar exposure conditions and for persons using similar radioprotective measures, comprising both a lead apron and a protective thyroid shield.

In double dosimetry (DD) approaches known in the art, an algorithm for combining the dose from two *Hp(10)*

dosimeters, one worn above the RP garments and the other one worn below, is used to calculate the effective dose $D_{DD}$, e.g. $D_{DD} = a*H_{under} + b*H_{over}$. Järvinen et al. reported values for the parameters $a$ and $b$ that vary from 0.5 to 1.64 and from 0.017 to 0.1 respectively, corresponding to different double dosimetry algorithms known in the art, also relating to effective dose estimation of workers wearing both a lead apron and a protective thyroid shield.

**Summary of the invention**

It is an object of embodiments of the present invention to provide good and efficient means and methods for the estimation of an effective dose received by a person, who is wearing a radioprotective garment, due to an external exposure to ionizing radiation.

It is an advantage of embodiments of the present invention that the effective dose of a person wearing a radioprotective garment can be estimated efficiently and accurately. For example, the effective dose of a person wearing a lead or lead-equivalent apron and thyroid shield under exposure conditions representative of medical staff working in interventional radiology and/or cardiology can be estimated within an estimation range of 40% to 160% of the factual effective dose, or even within an estimation range of 50% to 150% of the factual effective dose underlying the estimation, or may even be estimated in accordance with embodiments of the present invention with an underestimation margin of less than 50% and an overestimation margin of less than 50%.

While such estimation margins may appear quite broad, embodiments of the present invention may achieve an effective dose estimation accuracy for persons wearing radioprotective garments, e.g. as inversely related to the maximal uncertainty under a wide range of ionizing radiation exposure conditions similar to those encountered in interventional radiology and/or cardiology, that is better than most, and may even be better than all, prior-art methodologies for effective dose estimation based on personal dosimetry, including prior art estimation methods based on a single dosimeter data registration, as well as including prior art methods based on multiple dosimeter data registration.

It is an advantage of embodiments of the present invention that an effective dose estimation can be obtained from measurements collected by a dosimeter designed in such way that the dose response characteristics, e.g. the energy dependence and/or the angular dependence of the dose registration, are similar to those of the effective dose of a person wearing radioprotective garments, e.g. a radioprotective apron and/or thyroid shielding collar, under representative conditions of exposure, e.g. representative radiation fields, of medical staff working in interventional radiology and cardiology.

It is an advantage of embodiments of the present invention that a passive personal whole-body dosimeter is provided that is suitable for effective dose monitoring of medical staff working in IR/IC.

It is an advantage of embodiments of the present invention that the effective dose of a person can be monitored by a personal dosimeter worn on the body at a predetermined, single location.

It is an advantage of embodiments of the present invention that a dosimeter according to embodiments can be implemented in a single device, e.g. as opposed to the use of several dosimetric devices that are substantially mechanically disconnected, but while in use arranged in a predetermined spatial configuration, for the estimation of effective dose. Therefore, it is an advantage of embodiments of the present invention that the risk of misplacing a dosimeter in a set of dosimeters to be used in combination for estimating an effective dose can be reduced. Furthermore, it is an advantage of embodiments of the present invention that estimation errors due to inaccurate relative positioning of a set of dosimeters or due to inadvertently swapping dosimeters in such set is avoided.

The above objective is accomplished by a method and device according to the present invention.

In a first aspect, the present invention relates to a personal radiation dosimetry system as defined in claim 1. Said system comprises a personal radiation dosimeter for estimating an effective dose of an adult human wearing a radioprotective garment. The personal radiation dosimeter comprises a structural support element adapted for attaching to an exterior surface of the radioprotective garment while worn, such that a back surface, e.g. a back planar surface, of the structural support element faces toward the body of the adult human and a front surface, e.g. a planar front surface, of the structural support element faces away from the body of the adult human. The personal dosimeter also comprises at least two ionizing radiation detectors attached onto or housed in the structural support element. Each ionizing radiation detector has a substantially different dose response, e.g. a different dose response, as a function of a photon energy and an angle of incidence of radiation with respect to a reference direction. This reference direction is directed from the front surface toward the back surface, and may be perpendicular to either or both of these surfaces.

A predetermined linear combination of the dose responses of the at least two ionizing radiation detectors corresponds to an estimate in the range of 40% to 160% of the effective dose received by the adult human under each of a plurality of reference exposure conditions.

The plurality of reference exposure conditions comprises at least an exposure to a substantially planar photon wave propagating in the reference direction, an exposure to a substantially planar photon wave propagating along a direction at an angle of 45° with the reference direction and an exposure to a substantially planar photon wave propagating along a direction at an angle of 60° with the reference direction. Each of these planar photon waves has an energy distribution corresponding to one of the following :

> a) an X-ray radiation quality obtainable by a peak X-ray tube voltage of 80 kV and filtered by 0.50 mm Cu and 4.00 mm Al, this X-ray radiation quality corresponding to the wide X-ray spectrum W-80 as defined by the ISO 4037-1 standard,
> b) an X-ray radiation quality obtainable by a peak X-ray tube voltage of 60 kV and filtered by 0.60 mm Cu and 4.00 mm Al, this X-ray radiation quality corresponding to the narrow X-ray spectrum N-60 as defined by the ISO 4037-1 standard, and
> c) an X-ray radiation quality obtainable by a peak X-ray tube voltage of 60 kV and filtered by 0.30 mm Cu and 4.00 mm Al, this X-ray radiation quality corresponding to the wide X-ray spectrum W -60 as defined by the ISO 4037-1 standard.

According to the present invention, the radioprotective garment may comprise a radioprotective apron and a radioprotective thyroid shield.

According to the present invention, the dose response of a first ionizing radiation detector of the at least two ionizing radiation detectors may be at least five times higher than the dose response of a second ionizing radiation detector of the at least two ionizing radiation detectors for incident photon radiation having photon energies in the range of 20 keV to 30 keV.

According to the present invention, the dose response of the first ionizing radiation detector may be less than three times higher than the dose response of the second ionizing radiation detector for incident photon radiation having photon energies in the range of 75 keV to 85 keV.

According to the present invention, the dose response per unit of air kerma of the first ionizing radiation detector (5) may be substantially independent of the angle of incidence with respect to the reference direction over a range of the angle from 0° to at least 60°.

According to the present invention, the dose response per unit of air kerma of the second ionizing radiation detector for incident photon radiation of 80 keV propagating along the reference direction may be greater than or equal to 2.0 times the response per unit of air kerma of the second ionizing radiation detector for incident photon radiation of 60 keV propagating along the reference direction.

According to the present invention, the dose response per unit of air kerma of the second ionizing radiation detector for incident photon radiation of 80 keV propagating along the reference direction may be greater than or equal to 1.4 times the dose response per unit of air kerma of the second ionizing radiation detector for incident photon radiation of 100 keV propagating along the reference direction.

According to the present invention, the dose response per unit of air kerma of the second ionizing radiation detector for incident photon radiation of 80 keV propagating in a direction at an angle of 60° with respect to said reference direction may be less than 1.5 times the dose response per unit of air kerma of the second ionizing radiation detector for incident photon radiation of 100 keV propagating in said direction at said angle of 60° with respect to the reference direction.

According to the present invention, each ionizing radiation detector may comprise a radiation sensitive element and a radiation filter for filtering radiation incident on the radiation sensitive element in a manner dependent on the photonic energy and/or on the angle of incidence. The radiation sensitive element and/or the radiation filter may differ for each ionizing radiation detector such as to obtain said different dose responses thereof.

According to the present invention, the radiation sensitive element may comprise a thermoluminescent detector, a radio-photoluminescent detector and/or an optically stimulated luminescence detector, or may comprise another kind of passive radiation detector.

According to the present invention, the radiation sensitive element may comprise an active radiation detector, for example a diode detector and/or a Direct Ion Storage (DIS) detector.

According to the present invention, the filter of a first ionizing radiation detector of the at least two ionizing radiation detectors may be adapted for attenuating photon radiation having photon energies in the range of 20 keV to 40 keV by a transmittance factor in the range of 0.20 to 0.60. The transmittance factor may be defined as the ratio of the intensity of the attenuated photon radiation after passing the filter to the intensity of the incident photon radiation.

According to the present invention, the filter of the first ionizing radiation detector may comprise a plastic polymer material.

According to the present invention, the filter of a second ionizing radiation detector of the at least two ionizing radation detectors may be adapted for attenuating photon radiation propagating along said reference direction such as to obtain a transmittance of said photon radiation as function of photon energy that is substantially proportional to the transmittance of photon radiation as function of photon energy through the radioprotective garment.

According to the present invention, the filter of the second ionizing radiation detector may be adapted for attenuating photon radiation propagating along the reference direction and having energies in the range of 50 keV to 60 keV by a transmittance factor in the range of 0.02 to 0.25.

According to the present invention, the filter of the second ionizing radiation detector may comprise a first filtering element for attenuating photon radiation propagating along the reference direction before impinging on the radiation sensitive element, and a second filtering element for attenuating photon radiation propagating along a direction at an angle with the reference direction, in which this angle is in the range of 45° to 80°.

According to the present invention, the structural support element may comprise a backscatter filter supported by the back surface or forming at least part of the back surface. This backscatter filter may be adapted for attenuating radiation that is backscattered toward the at least two ionizing radiation detectors by the radioprotective garment when the structural support element is attached to the exterior surface of the radioprotective garment.

According to the invention, the system also comprises a processing device configured for, e.g. adapted for and/or programmed for, estimating an effective dose registered by the personal radiation dosimeter by calculating the predetermined linear combination of said values. The system may further comprise a reader for reading out the personal radiation dosimeter. The reader is adapted for determining values representative of the dose collected by each of the at least two ionizing radiation detectors. According to the present invention, the processing device may be adapted for calculating the predetermined linear combination of the values to obtain an effective dose estimate, in which this effective dose estimate may have a dose response per unit of air kerma to a planar photon wave having an energy distribution corresponding to N-100, as defined hereinbelow, and that impinged on the dosimeter propagating along the reference direction, that is greater than or equal to 1.2 times the dose response per unit of air kerma to a planar photon wave having an energy distribution corresponding to N-80, as defined hereinbelow.

According to the present invention, the processing device may be adapted for calculating the predetermined linear combination of the values to obtain an effective dose estimate, in which this effective dose estimate may have a dose response per unit of air kerma to a planar photon wave having an energy distribution corresponding to N-100, as defined hereinbelow, and that impinged on the dosimeter propagating along the reference direction, that is greater than or equal to 1.1 times the dose response per unit of air kerma to a planar photon wave having an energy distribution corresponding to N-120, as defined hereinbelow, and that impinged on the dosimeter propagating along the reference direction.

In a further aspect, the present invention also relates to a personal radiation dosimetry method, as defined in claim 14, for estimating an effective dose of an adult human wearing a radioprotective garment. The method comprises positioning at least two ionizing radiation detectors on an exterior surface of the radioprotective garment while worn, such that each of the at least ionizing radiation detectors is less than 10 cm, e.g. less than 5 cm or even less than 3 cm, separated in distance from each other ionizing radiation detector. The at least two ionizing radiation detectors have substantially different dose responses as a function of a photon energy and an angle of incidence of radiation with respect to a reference direction. This reference direction is directed toward the body of adult human, e.g. may correspond to a frontal angle of incidence with respect to the body. The method further comprises detecting ionizing radiation by these ionizing radiation detectors.

The method also comprises determining values representative of the dose collected by each of the at least two ionizing radiation detectors. The method further comprises estimating an effective dose received by the adult human by calculating a predetermined linear combination of said values. This predetermined linear combination of the dose responses of the at least two ionizing radiation detectors corresponds to an estimate in the range of 40% to 160% of the effective dose received by the adult human under each of a plurality of reference exposure conditions.

The plurality of reference exposure conditions comprises at least an exposure to a substantially planar photon wave propagating in the reference direction, an exposure to a substantially planar photon wave propagating along a direction at an angle of 45° with the reference direction and an exposure to a substantially planar photon wave propagating along a direction at an angle of 60° with the reference direction. Each of these planar photon waves has an energy distribution corresponding to one of the following :

> an X-ray radiation quality obtainable by a peak X-ray tube voltage of 80 kV and filtered by 0.50 mm Cu and 4.00 mm Al, this X-ray radiation quality corresponding to the wide X-ray spectrum W-80 as defined by the ISO 4037-1 standard,
> an X-ray radiation quality obtainable by a peak X-ray tube voltage of 60 kV and filtered by 0.60 mm Cu and 4.00 mm Al, this X-ray radiation quality corresponding to the narrow X-ray spectrum N-60 as defined by the ISO 4037-1 standard, and
> an X-ray radiation quality obtainable by a peak X-ray tube voltage of 60 kV and filtered by 0.30 mm Cu and 4.00 mm Al, this X-ray radiation quality corresponding to the wide X-ray spectrum W -60 as defined by the ISO 4037-1 standard.

In a method according to embodiments of the present invention, calculating the predetermined linear combination of the values may comprise calculating an effective dose estimate having a dose response per unit of air kerma to a planar photon wave having an energy distribution corresponding to N-100, as defined hereinbelow, and that impinged on the detectors propagating along the reference direction, that is greater than or equal to 1.1 times the dose response per unit of air kerma to a planar photon wave having an energy distribution corresponding to N-120, as defined hereinbelow, and that impinged on the detectors propagating along the reference direction.

These and other aspects of the invention will be apparent from and elucidated with reference to the embodiment(s) described hereinafter.

**Brief description of the drawings**

Where in the drawings data are represented by graphs, data points may be connected by lines for visualization purposes only, and may thus not correspond exactly to actual measurements or representative values in intermediate points on such lines between the indicated data points, e.g. the marked end points of the line segments.

FIG. 1 shows a typical energy dependence and angular dependence of the dose response per air kerma free-in-air of the personal dose equivalent $Hp(10)$ in accordance with the standard set by ICRP publication 74 and for a simulated model of a $Hp(10)$ personal dosimeter based on a thermoluminescent detector, as known in the art.

FIG. 2 illustrates the energy and angular dependence of the dose responses per air kerma received by a simulated $Hp(10)$ dosimeter, as known in the art, when placed respectively under and over a 0.5 mm lead shield.

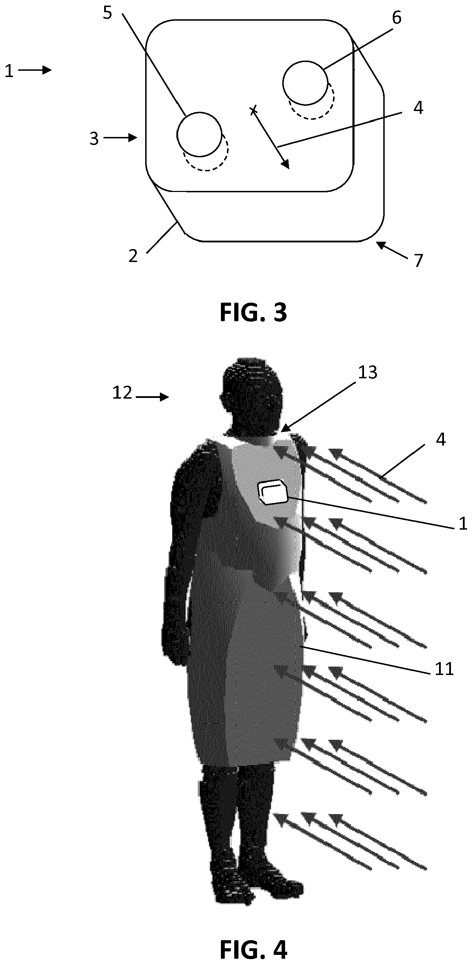

FIG. 3 shows a personal radiation dosimeter in accordance with embodiments of the present invention.

FIG. 4 shows a personal radiation dosimeter in accordance with embodiments of the present invention when attached to a radioprotective garment worn by an adult human, such as to monitor the effective dose of ionizing radiation received by this human.

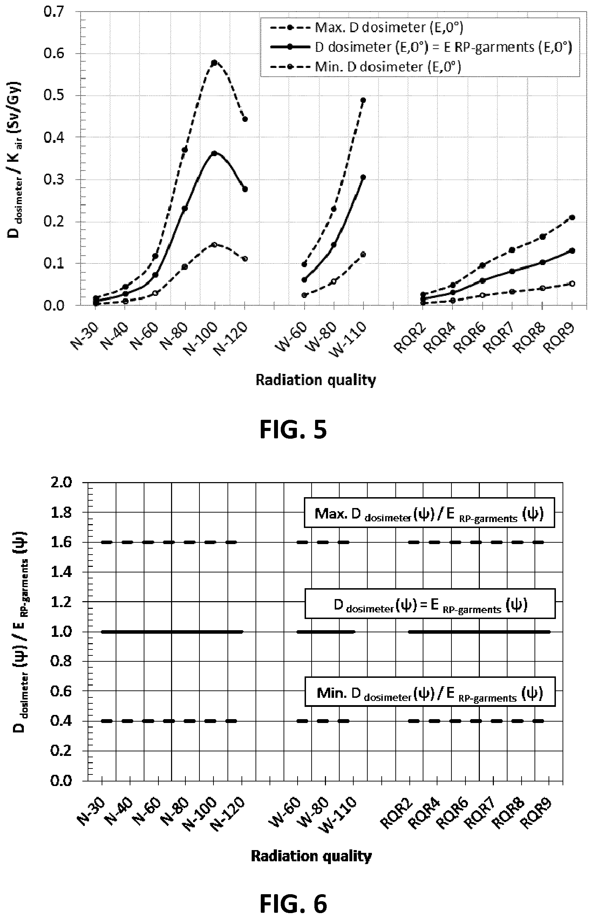

FIG. 5 shows maximum and minimum limits, corresponding to a 40% to 160% range with respect to the effective dose, for the dose response per incident air kerma ($D_{dosimeter}/K_{air}$) free-in-air of a dosimeter in accordance with embodiments of the present invention, for exposures to unidirectional photon beams with an angle of incidence of 0° having respectively 15 different x-ray quality spectra.

FIG. 6 shows maximum and minimum limits, corresponding to a 40% to 160% range with respect to the effective dose, for the dose response per incident air kerma ($D_{dosimeter}/K_{air}$) free-in-air of a dosimeter in accordance with embodiments of the present invention, for exposures to unidirectional photon beams with angles of incidence between -60° and +60° parallel to either the transverse or the sagittal plane of the body and having different x-ray quality spectra.

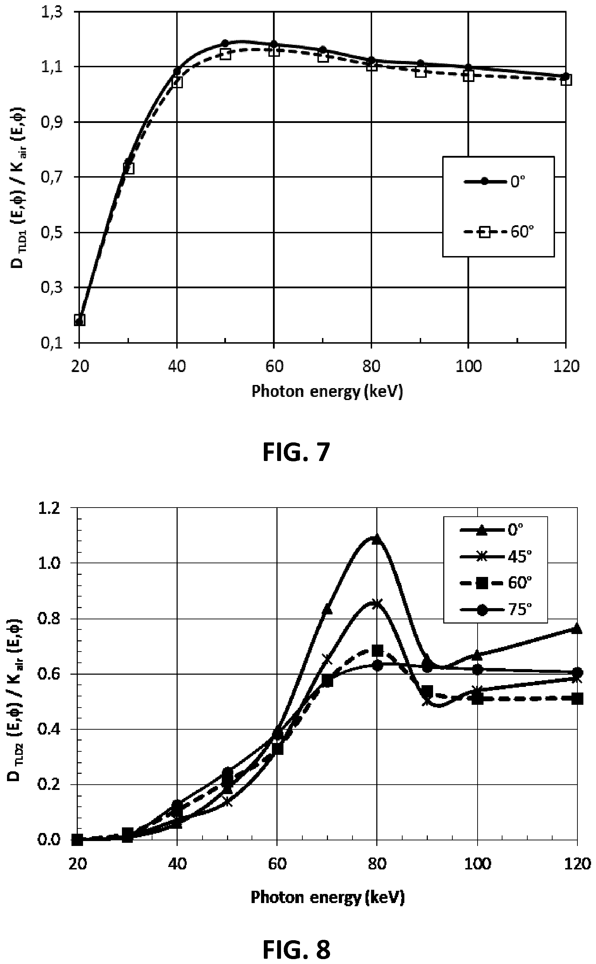

FIG. 7 shows an exemplary dose response per unit of air kerma free-in-air, as a function of photon energy and angle of incidence, of a first ionizing radiation detector in a dosimeter in accordance with an embodiment of the present invention.

FIG. 8 shows an exemplary dose response per unit of air kerma free-in-air, as a function of photon energy and angle of incidence, of a second ionizing radiation detector in a dosimeter in accordance with an embodiment of the present invention.

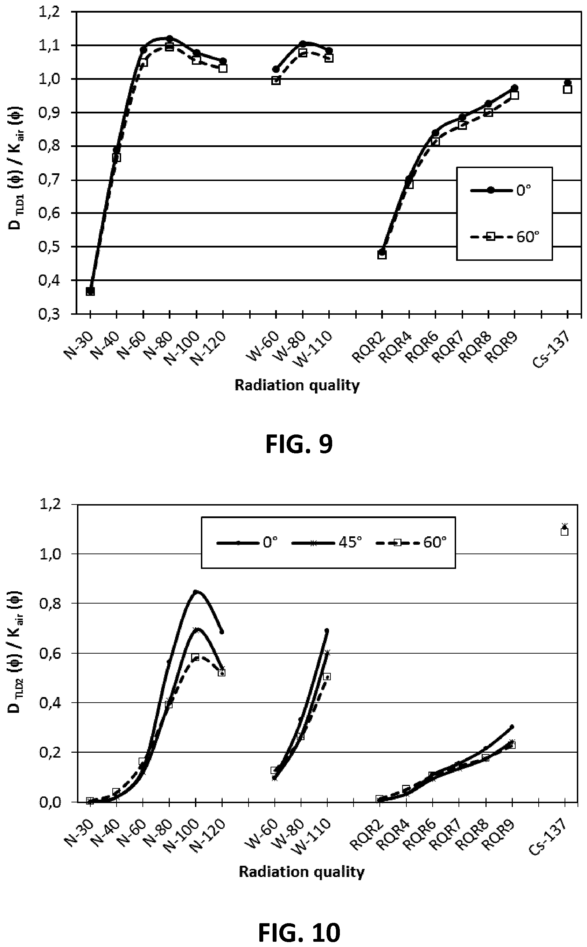

FIG. 9 shows an exemplary dose response per unit of air kerma free-in-air, for different standard photon radiation qualities and for different angles of incidence, of a first ionizing radiation detector in a dosimeter in accordance with an embodiment of the present invention.

FIG. 10 shows an exemplary dose response per unit of air kerma free-in-air, for different standard photon radiation qualities and for different angles of incidence, of a second ionizing radiation detector in a dosimeter in accordance with an embodiment of the present invention.

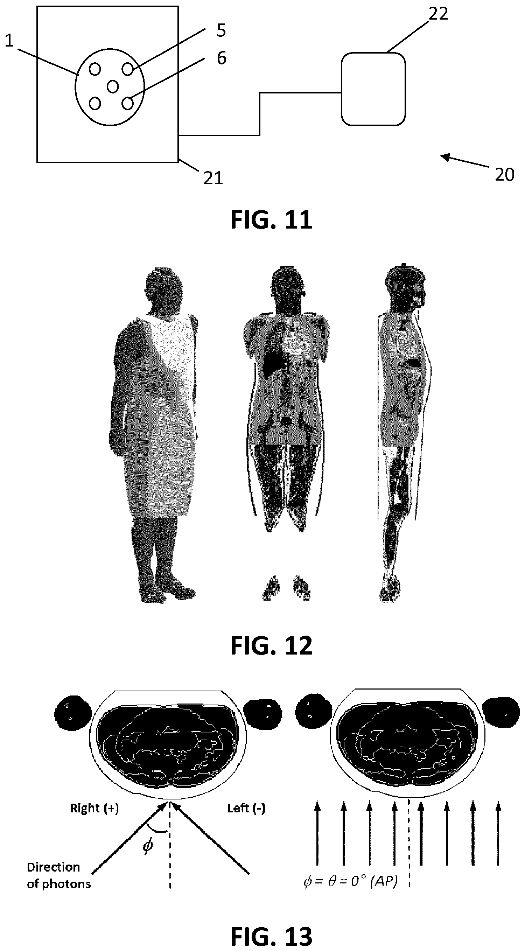

FIG. 11 shows a personal radiation dosimetry system in accordance with embodiments of the present invention.

FIG. 12 shows an ICRP Reference Computational Male Phantom, as defined ICRP Publication 110, equipped with a mathematically-defined lead apron and thyroid collar, for illustrating embodiments of the present invention.

FIG. 13 shows an angular variation of photon beams used for calculating an effective dose, parallel to the transverse plane of the body with angles of incidence $\varphi$ between +60°, 0°, and -60°, for illustrating embodiments of the present invention.

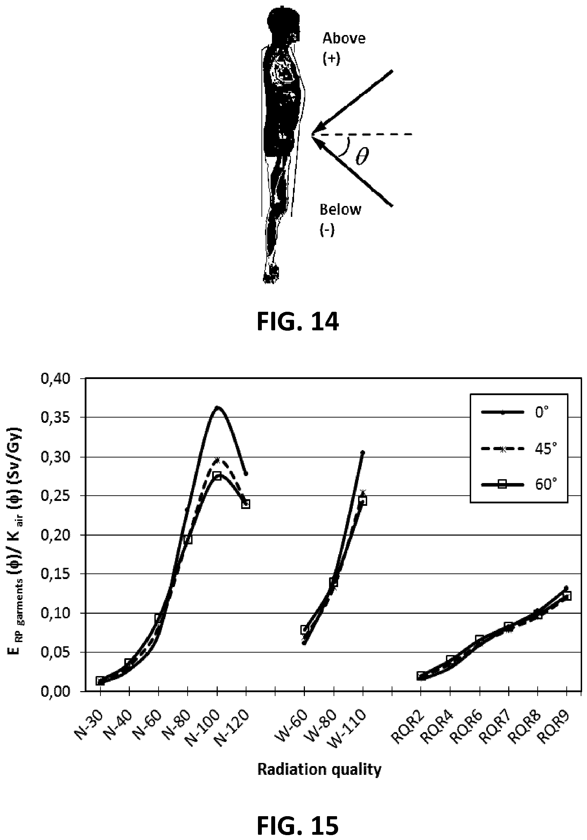

FIG. 14 shows an angular variation of photon beams used for calculating an effective dose, parallel to the sagittal plane of the body for angles of incidence $\vartheta$ between -60°, 0° (AP) and +60°, for illustrating embodiments of the present invention.

FIG. 15 shows coefficients of effective dose with radioprotective lead garments per incident air kerma for different photon beam radiation qualities and for angles of incidence corresponding to photon beams parallel to the transverse plane of the body coming from the right side of the body, provided for illustrating embodiments of the present invention.

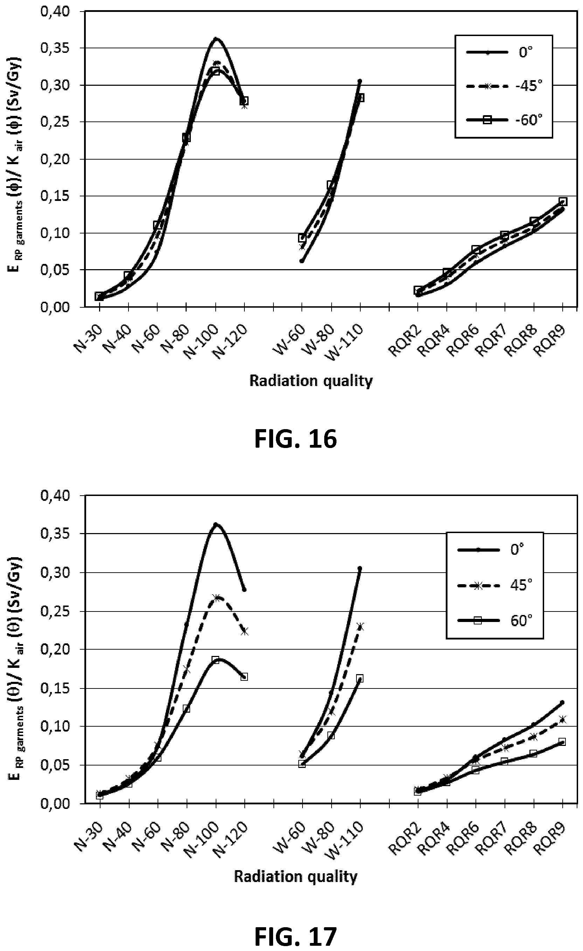

FIG. 16 shows coefficients of effective dose with radioprotective lead garments per incident air kerma for different photon beam radiation qualities and angles of incidence corresponding to photon beams parallel to the transverse plane of the body coming from the left side of the body, provided for illustrating embodiments of the present invention.

FIG. 17 shows coefficients of effective dose with radioprotective lead garments per incident air kerma for different photon beam radiation qualities and angles of incidence corresponding to photon beams parallel to the sagittal plane of the body with positive angles coming from above with respect to the body, provided for illustrating embodiments of the present invention.

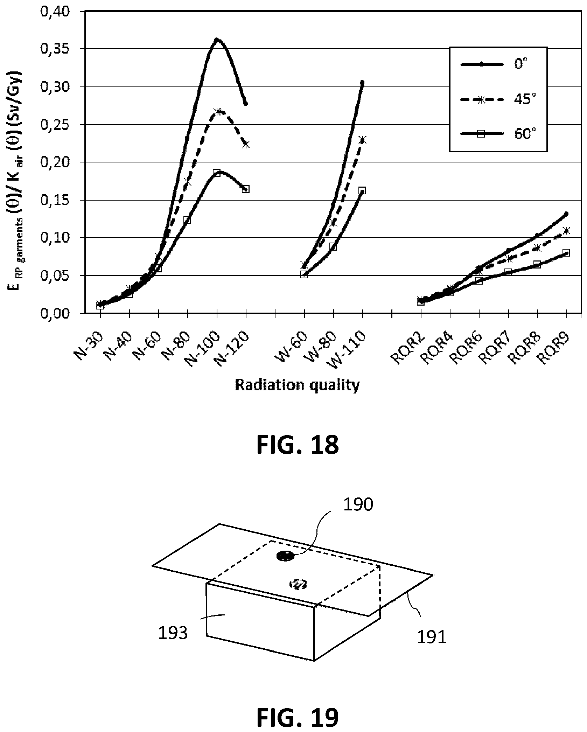

FIG. 18 shows coefficients of effective dose with radioprotective lead garments per incident air kerma for different photon beam radiation qualities and angles of incidence corresponding to photon beams parallel to the sagittal plane of the body with positive angles coming from below with respect to the body, provided for illustrating embodiments of the present invention.

FIG. 19 shows a simulation model for determining the energy and angular dependency of dose response of an *Hp(10)* dosemeter as known in the art, for over-apron and under-apron -like conditions.

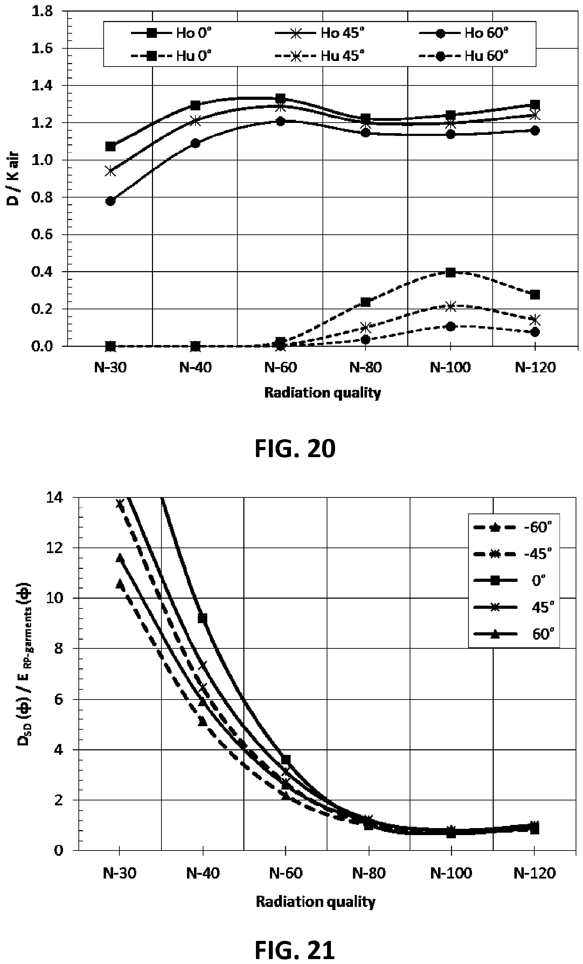

FIG. 20 shows simulated dose responses per air kerma, for different x-ray qualities and angles of incidence, of an *Hp(10)* dosemeter as known in the art, in over and under-apron-like conditions.

FIG. 21 shows a ratio between the dose obtained with a single dosimetry correction factor proposed by Huyskens *et al.* and the effective dose with radioprotective garments due to photons parallel to the transverse plane of the body, for illustrating the performance of embodiments of the present invention with respect to a prior art method.

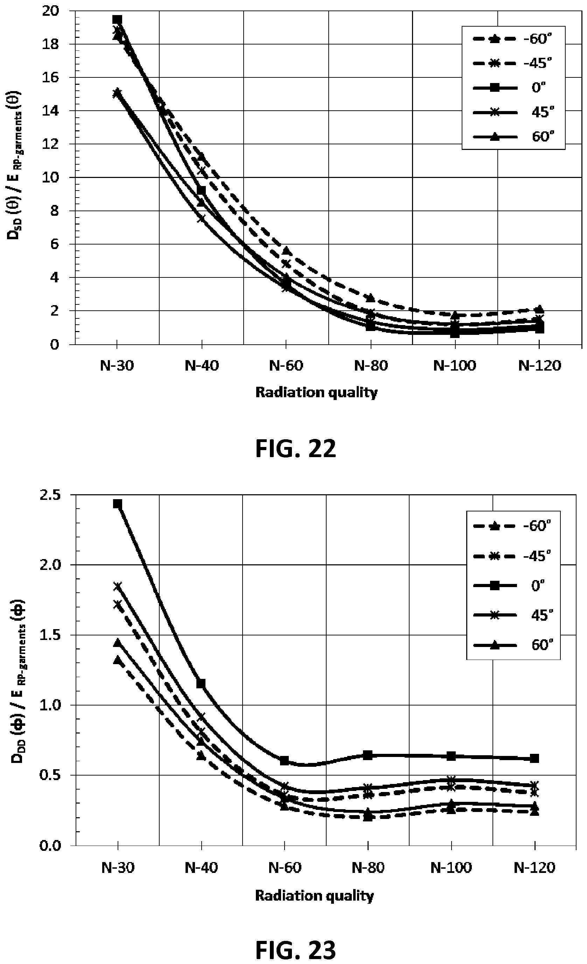

FIG. 22 shows a ratio between the dose obtained with a single dosimetry correction factor proposed by Huyskens *et al.* and the effective dose with radioprotective garments due to photons parallel to the sagittal plane of the body, for illustrating the performance of embodiments of the present invention with respect to a prior art method.

FIG. 23 shows a ratio between the dose obtained with a double dosimetry algorithm proposed by Rosenstein and Webster and the effective dose with radioprotective garments due to photons parallel to the transverse plane of the body, for illustrating the performance of embodiments of the present invention with respect to a prior art method.

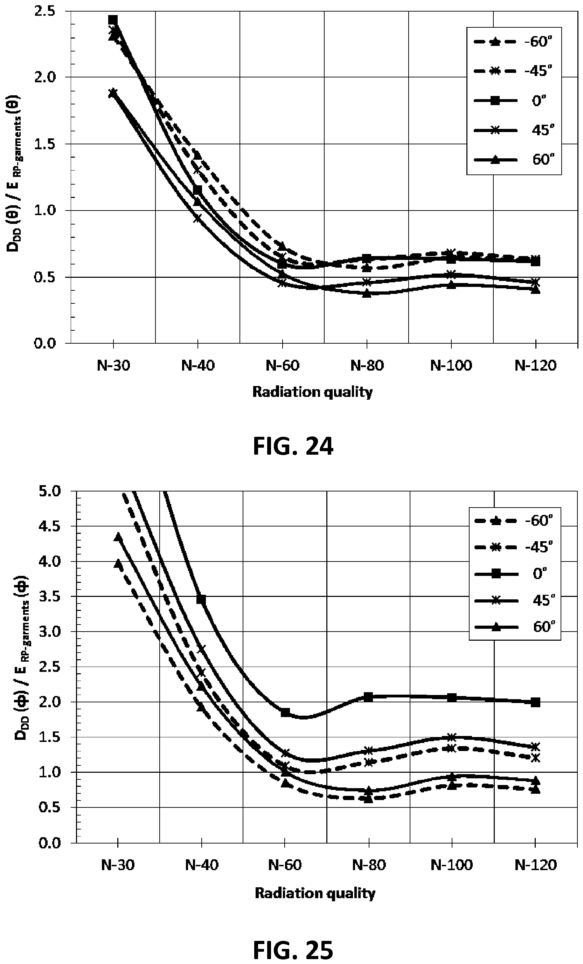

FIG. 24 shows a ratio between the dose obtained with a double dosimetry algorithm proposed by Rosenstein and Webster and the effective dose with radioprotective garments due to photons parallel to the sagittal plane of the body, for illustrating the performance of embodiments of the present invention with respect to a prior art method.

FIG. 25 shows a ratio between the dose obtained with a double dosimetry algorithm proposed by Clerinx et. al and the effective dose with radioprotective garments due to photons parallel to the transverse plane of the body, for illustrating the performance of embodiments of the present invention with respect to a prior art method.

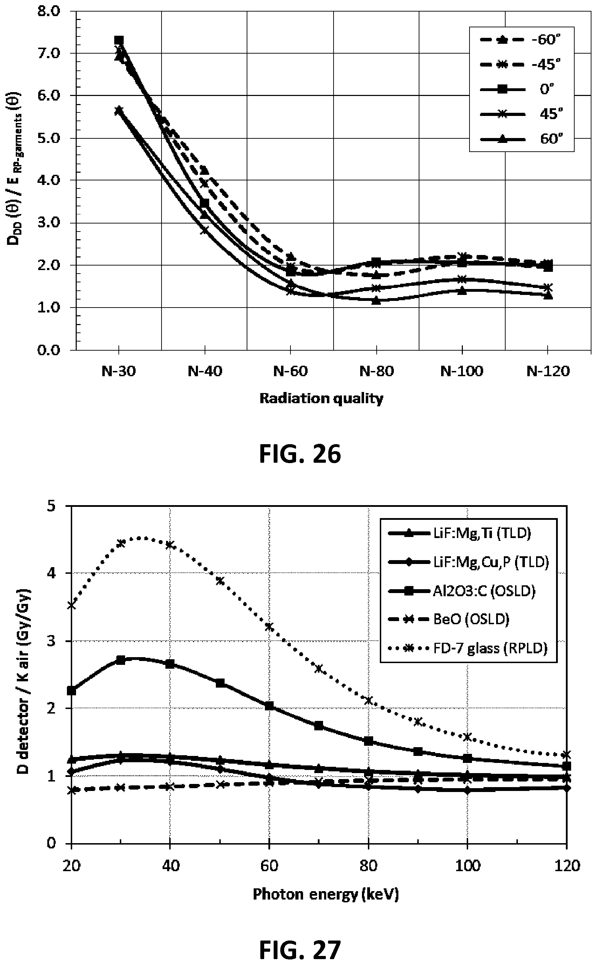

FIG. 26 shows a ratio between the dose obtained with a double dosimetry algorithm proposed by Clerinx et al. and the effective dose with radioprotective garments due to photons parallel to the sagittal plane of the body, for illustrating the performance of embodiments of the present invention with respect to a prior art method.

FIG. 27 shows the energy dependence of the dose absorbed by different radiation sensitive element materials per incident air kerma for unidirectional monoenergetic photon beams with energies between 20 and 120 keV, for illustrating aspects of embodiments of the present invention.

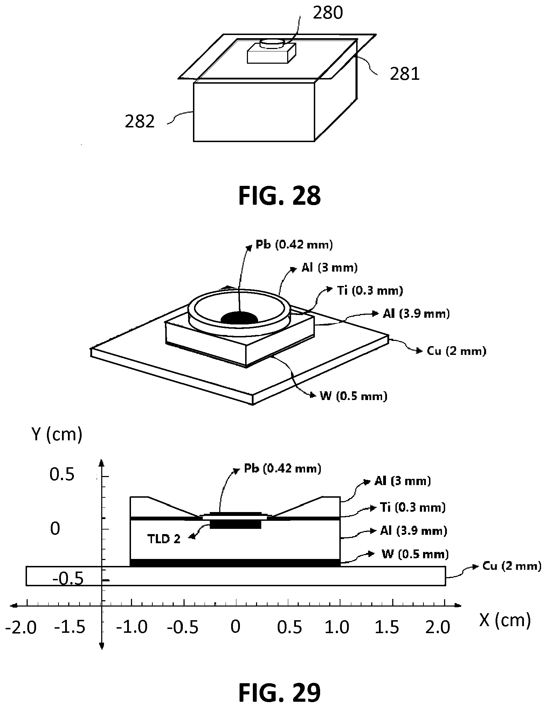

FIG. 28 shows a simulation model for determining the dose response of a dosimeter in accordance with embodiments of the present invention.

FIG. 29 shows the geometry and configuration of a second detector comprising a LiF:Mg,Ti TLD and associated filter element for use in an exemplary dosimeter according to embodiments of the present invention.

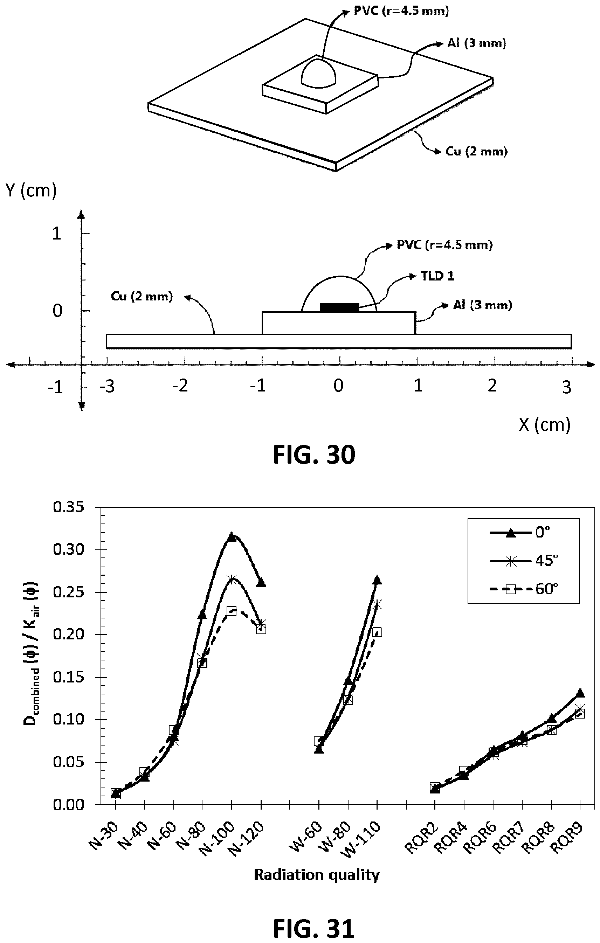

FIG. 30 shows the geometry and configuration of a first detector comprising a LiF:Mg,Ti TLD and associated filter element for use in an exemplary dosimeter according to embodiments of the present invention.

FIG. 31 shows the energy and angular dependence of the dose obtained with an exemplary dosimeter in accordance with embodiments of the present invention, for different standard radiation quality spectra and different angles of incidence.

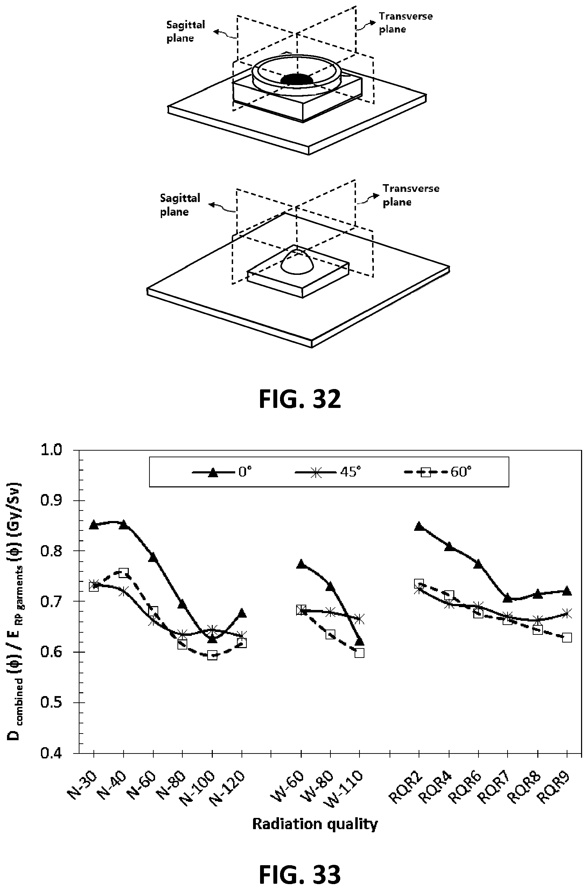

FIG. 32 illustrates the symmetrical geometry in transverse as well as sagittal planes of detectors in an exemplary dosimeter in accordance with embodiments of the present invention.

FIG. 33 shows the ratio between an effective dose estimate obtained by an exemplary dosimeter in accordance with embodiments of the present invention and the effective dose of an adult human, in the form of a simulated anthropomorphic phantom, while wearing radioprotective lead garments, for photon beams with different x-ray qualities parallel to the transverse plane of the body with positive angles of incidence.

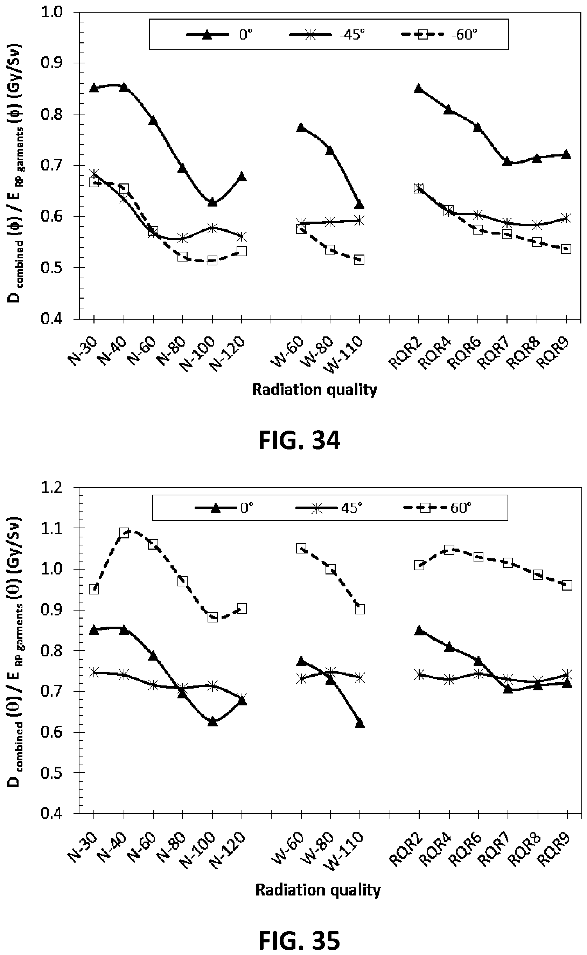

FIG. 34 shows the ratio between an effective dose estimate obtained by an exemplary dosimeter in accordance with embodiments of the present invention and the effective dose of an adult human, in the form of a simulated anthropomorphic phantom, while wearing radioprotective lead garments, for photon beams with different x-ray qualities parallel to the transverse plane of the body with negative angles of incidence.

FIG. 35 shows the ratio between an effective dose estimate obtained by an exemplary dosimeter in accordance with embodiments of the present invention and the effective dose of an adult human, in the form of a simulated anthropomorphic phantom, while wearing radioprotective lead garments, for photon beams with different x-ray qualities parallel to the sagittal plane of the body with positive angles of incidence.

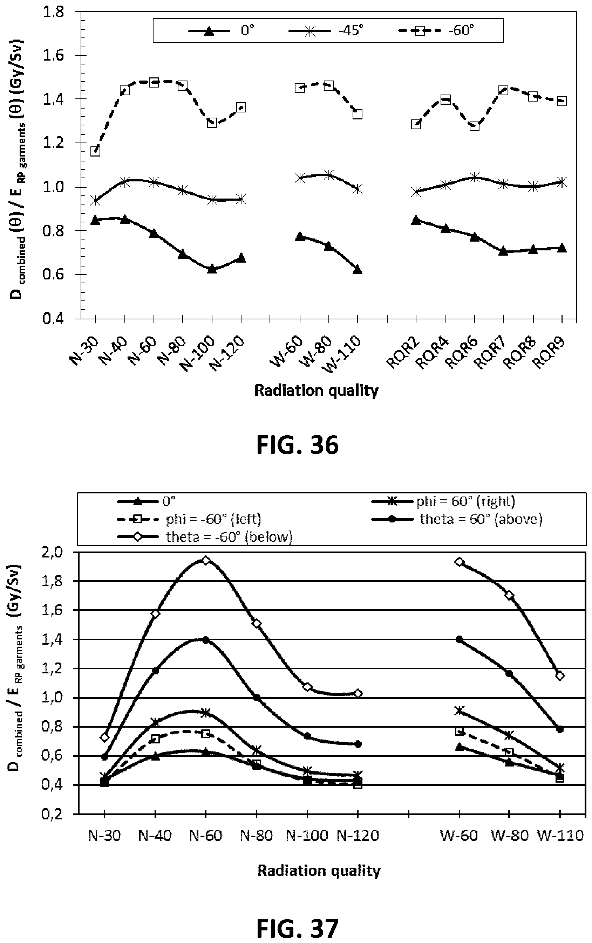

FIG. 36 shows the ratio between an effective dose estimate obtained by an exemplary dosimeter in accordance with embodiments of the present invention and the effective dose of an adult human, in the form of a simulated anthropomorphic phantom, while wearing radioprotective lead garments, for photon beams with different x-ray qualities parallel to the sagittal plane of the body with negative angles of incidence.

FIG. 37 illustrates a ratio between an effective dose estimate obtained by an exemplary dosimeter using RPL glass type radiosensitive detectors and the effective dose of an adult human, in the form of a simulated anthropomorphic phantom, while wearing radioprotective lead garments, for photon beams with different x-ray qualities and different angles of incidence, provided as a comparative example for illustrating properties of embodiments of the present invention.

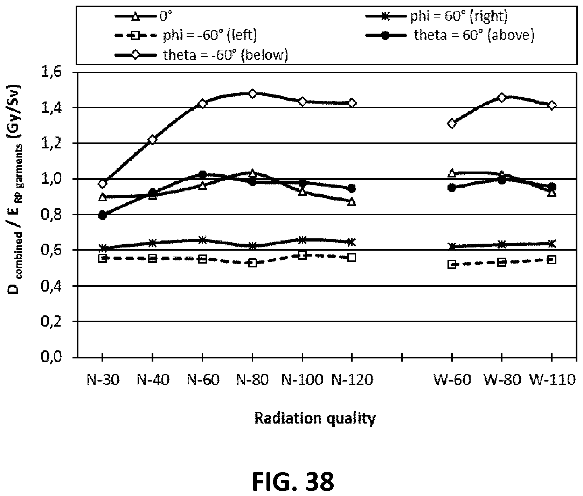

FIG. 38 shows the ratio between an effective dose estimate obtained by another exemplary dosimeter in accordance with embodiments of the present invention and the effective dose of an adult human, in the form of a simulated anthropomorphic phantom, while wearing radioprotective lead garments, for photon beams with different x-ray qualities parallel to the sagittal plane of the body with negative angles of incidence.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a "personal whole-body dosimeter" or a "personal dosimeter", this refers specifically to a personal dosimeter suitable for estimating a whole body dose, e.g. an effective dose.

Where in embodiments of the present invention reference is made to a whole-body dose or to an effective dose, this refers to a tissue-weighted sum of equivalent doses in a plurality of predetermined tissues and organs of the body. As such, the effective dose is representative of a stochastic health risk of an amount of ionizing radiation received by the body as a whole. Thus, an effective dose takes the specific sensitivity of each of the predetermined body parts to ionizing radiation into account. Thus, effective dose may refer to effective dose E in the sense of the ICRP 103 specification of 2007, but also to similar tissue-weighted sums of equivalent doses, e.g. as defined by ICRP 60 of 1990, or by ICRP 26 of 1977. Likewise, reference to effective dose in embodiments of the present invention may also refer to an effective dose equivalent $H_E$, e.g. as referred to in US NRC regulation 10 CFR 20 1003.

In a first aspect, the present invention relates to a personal radiation dosimeter system comprising a personal radiation dosimeter for estimating an effective dose of an adult human wearing a radioprotective garment, e.g. an adult human user wearing radioprotective clothing. The dosimeter comprises a structural support element for attaching to the radioprotective garment while worn and at least two ionizing radiation detectors having different dose responses as a function of energy and angle of incidence with respect to a reference direction. A predetermined linear combination of the dose responses of the detectors corresponds to an estimate in the range of 40% to 160% of the effective dose received by the adult human under each of a plurality of reference exposures that comprise respectively planar photon wave exposures along the reference direction, at an angle of 45° and at an angle of 60° with the reference direction, wherein each planar wave has an energy distribution corresponding to one of the following :

  an X-ray radiation quality obtainable by a peak X-ray tube voltage of 80 kV and filtered by 0.50 mm Cu and 4.00 mm Al, this X-ray radiation quality corresponding to the wide X-ray spectrum W-80 as defined by the ISO 4037-1 standard,
  an X-ray radiation quality obtainable by a peak X-ray tube voltage of 60 kV and filtered by 0.60 mm Cu and 4.00 mm Al, this X-ray radiation quality corresponding to the narrow X-ray spectrum N-60 as defined by the ISO 4037-1 standard, and
  an X-ray radiation quality obtainable by a peak X-ray tube voltage of 60 kV and filtered by 0.30 mm Cu and 4.00 mm Al, this X-ray radiation quality corresponding to the wide X-ray spectrum W -60 as defined by the ISO 4037-1 standard.

For example, each of these planar photon waves may have an energy distribution corresponding to the W-80 quality defined by ISO 4037-1.

Thus, a dosimeter according to embodiments of the present invention can be used to estimate the effective dose of a person wearing a radioprotective garment, such as a lead apron with thyroid shield, with an overestimation below or equal to +60% and an underestimation below or equal to -60%, e.g. under exposure conditions representative of medical staff working in interventional radiology and cardiology.

The personal radiation dosimeter being part of the present invention may be particularly suitable for estimating the effective dose of medical staff wearing at least one radioprotective garment, for example in the form of an apron, e.g. an effective dose of ionizing radiation received while performing occupational activities in interventional radiology or interventional cardiology. The personal radiation dosimeter according to embodiments of the present invention may be particularly suitable for estimating the effective dose of a person wearing a radioprotective apron, e.g. a lead apron and thyroid shield, this effective dose corresponding to a quantity of radiation received under exposure conditions representative of medical staff working in interventional radiology and cardiology. Particularly, the personal radiation dosimeter may be suitable for estimating the effective dose under such representative irradiation conditions with an overestimation less than or equal to 60% and an underestimation less than or equal to 60%, e.g. such that the effective dose estimate is within the range of 40% to 160% of the factual effective dose, e.g. in the range of 50% to 150% thereof, under such representative conditions of exposure.

For example, the at least two ionizing radiation detectors may be configured such that, e.g. may be adapted in form and composition, e.g. may be adapted in spatial geometry and material composition, such that a predetermined linear combination of the dose responses of the detectors corresponds to an estimate in the range of 40% to 160% of the effective dose received by the adult human under each of a plurality of reference exposures that comprise respectively planar photon wave exposures along the reference direction, at an angle of 45° and at an angle of 60° with the reference direction, wherein each planar wave has an energy distribution corresponding to the W-80 quality defined by ISO 4037-1.

A personal radiation dosimeter 1 being part of the present invention is shown in FIG. 3. This personal radiation dosimeter is specifically adapted for estimating an effective dose of an adult human 12 wearing a radioprotective garment, e.g. as illustrated in FIG. 4. The effective dose may be a radiation effective dose corresponding to an amount of external radiation deposited in the body of the adult human 12. External radiation may refer to radiation originating from a source outside the body of the adult human 12. This external radiation may for example comprise photon radiation, e.g. photon radiation comprising, or consisting of, photon energies below 200 keV, e.g. photon radiation substantially consisting of photons having energies below 150 keV, or even below 100 keV. The external radiation may for example comprise scattered radiation, for example produced by the scattering of a primary radiation quality obtainable by an X-ray generator, e.g. as used in medical imaging, such as an X-ray tube having a peak energy below 200 keV, on a volume consisting substantially of low atomic number (Z) material, e.g. corresponding to a body of a patient.

The radioprotective garment may act as a radiation shield for a predetermined body part, e.g. the radioprotective garment may be an apron with or without a thyroid shielding collar. The radioprotective garment may for example comprise a radioprotective apron 11 and a radioprotective thyroid shield 13.

The radioprotective garment may comprise a radioprotective apron having the shape of a hospital apron, which may comprise lead or another strong radiation absorber, e.g. a different highly attenuating material or composite material for attenuating X-ray radiation. The radioprotective apron may for example have a lead thickness, or a lead-equivalent thickness, in the range of 0.2 mm to 1.0 mm, e.g. a lead thickness or lead-equivalent thickness of 0.5 mm, of 0.35 mm, of 0.475 mm, of 0.42 mm, of 0.25 mm or of 0.2 mm. A lead-equivalent thickness may refer to a radioprotective apron attenuating a fraction of ionizing radiation incident thereon that equivalent to the fraction that would be absorbed by a layer of lead having the stated thickness.

Thus, exposure of vital organs to ionizing radiation can be reduced. The radioprotective garment may also comprise a thyroid collar, e.g. comprising lead or another strong radiation absorber, for reducing an exposure of the thyroid gland to ionizing radiation while worn. The radioprotective garment may comprise a combination of radioprotective apron and thyroid shielding collar. However, the radioprotective garment may also, alternatively or additionally, comprise other wearable articles specifically adapted for reducing radiation exposure of predetermined body parts, e.g. radioprotective goggles for protecting the eyes or a radioprotective belt for protecting the gonads.

The dosimeter may be adapted for estimating the effective dose by being adapted for registering a plurality of dose-related quantities such that an effective dose of the adult human can be computed taking these quantities into account. The dosimeter may be adapted for estimating the effective dose by specifically taking the radioprotective effect of the radioprotective garment into account in estimating the dose, e.g. the dosimeter may be specifically configured such as to enable the calculation of the effective dose of a human adult taking predetermined radioprotective properties of a radioprotective garment to be worn in combination with the dosimeter into account.

The personal radiation dosimeter 1 being part of the present invention comprises a structural support element 2, for example a housing or an enclosure, a support plate or a support frame. The structural support element 2 may be a closed, closed yet reversibly openable or open box or may even be substantially two-dimensional, e.g. substantially flat. The structural support element 2 may be a singly connected element when in use, e.g. may be at least singly connected when attached to a radioprotective garment in order to monitor an effective dose of the person wearing said garment.

The structural support element 2 is adapted for attaching to an exterior surface of the radioprotective garment while worn. For example, the structural support element may comprise a clip for attaching to the garment, or may comprise other fastening means. The exterior surface of the radioprotective garment refers to a surface of the garment that is directed outward with respect to the wearer while being worn. Alternatively, the structural support element may be adapted for attaching to the exterior surface of the radioprotective garment by being dimensioned such as to fit into a pocket sown onto or otherwise provided over the radioprotective garment.

The structural support element 2 is adapted for attaching to the exterior surface of the radioprotective garment while worn, such that a back surface 7 of the structural support element 2 faces toward the body of the adult human while wearing the radioprotective garment and a front surface 3 of the structural support element 2 faces away from the body of the adult human.

A reference direction 4 is defined from the front surface to the back surface, e.g. such as to correspond to an anterior-posterior axis of the body of the adult human when the dosimeter is attached to the radioprotective garment while worn. This reference direction 4 may for example be perpendicular to the back surface and/or perpendicular to the front surface, and may be oriented from the front surface toward the back surface. The reference direction may also correspond to an axis of symmetry of the structural support element 2, e.g. in case of a cylindrically symmetrical structural support element acting as housing for the ionizing radiation detectors 5,6. The reference direction may for example correspond to a principal axis of the structural support element, e.g. the direction of a vertex of a structural support element shaped as a rectangular box.

The structural support element may for example be a substantially inflexible housing, e.g. made of a substantially inelastic material, e.g. such as to provide mechanical protection to the detectors housed in such housing.

Thus, a personal radiation dosimeter being part of the present invention may comprise a single enclosure or housing. For example, it is an advantage of embodiments that the dosimeter can be positioned in a single, predefined location on the radioprotective garment, to provide a good estimate of effective dose without requiring additional dosimeters placed in additional locations during exposure. Thus estimation errors due to inaccurate relative positioning of multiple dosimeters can be advantageously avoided. Furthermore, the use of such dosimeter according to embodiments may be less complex compared to effective dose estimation methods based on multiple dosimeter readings. This also reduces the risk of accidental exchange of individual dosimeters in a set as used in prior art effective dose estimation methods, thereby invalidating the collected measurement, and the risk of losing or forgetting one of the dosimeters in such set.

In embodiments according to the present invention, the structural support element 2 may comprise a backscatter filter that is supported by the back surface, or that forms the back surface 7, or that forms a part of the back surface 7. This backscatter filter is adapted for attenuating radiation that is backscattered toward the at least two ionizing radiation detectors by the radioprotective garment when the structural support element 2 is attached to the exterior surface of the radioprotective garment. For example, such backscatter filter may comprise a plate or plate-like element, and may be composed of copper, e.g. the backscatter filter may comprise a copper layer of at least 1 mm, e.g. having a thickness in the range of 1 mm to 3 mm, e.g. 2 mm.

The dosimeter 1 according to embodiments also comprises at least two ionizing radiation detectors 5,6 housed in or attached onto the structural support element 2. Each of these ionizing radiation detectors has a different dose response than the other ionizing radiation detectors, in which the dose response is represented as a function dependent on photon energy and on an angle of incidence of radiation with respect to the reference direction 4.

In a dosimeter 1 according to embodiments of the present invention, each ionizing radiation detector 5,6 may comprise a radiation sensitive element and a radiation filter for filtering radiation incident on the radiation sensitive element in a manner dependent on the photonic energy and/or on the angle of incidence. The radiation sensitive element and/or the radiation filter may furthermore differ for each ionizing radiation detector such as to obtain the different dose responses thereof.

For example, the radiation sensitive element may comprise at least one passive detector. For example, the radiation sensitive element may comprise a thermo-luminescent detector (TLD), e.g. comprising a lithium fluoride material such as LiF:Mg,Ti. The radiation sensitive element, e.g. the at least one dosimetric detector, may comprise an optically stimulated luminescent detector (OSLD), e.g. comprising an aluminium oxide material such as $Al_2O_3$:C. The radiation sensitive element may comprise at least one radio-photoluminescent (RPL) detector, e.g. a radio-photoluminescence glass material.

Alternatively or additionally, the radiation sensitive element may comprise at least one active detector, such as a diode detector or a Direct Ion Storage (DIS) detector.

The at least two ionizing radiation detectors 5,6 are configured such that a predetermined linear combination of the dose responses of the ionizing radiation detectors corresponds to an estimate of the effective dose received by the adult human, in which this estimate of the effective dose is an estimate in the range of 40% to 160% of the factual effective dose for each of a plurality of reference exposure conditions. Preferably, in embodiments according to the present invention, the estimate of the effective dose is an estimate in the range of 50% to 150% of the factual effective dose for each of a plurality of reference exposure conditions.

It is to be noted that the predetermined linear combination is applied to detector dose readouts of detectors of a single dosimeter, e.g. housed in or attached to a single support element of a single dosimeter. Prior art methods may be known to apply a linear combination to dose readouts obtained from a plurality of dosimeters, e.g. one positioned above the radioprotective garment and one positioned below the radioprotective garment during use. Therefore, one such dosimeter in accordance with a prior art method is always filtered by an additional layer of material formed by the radioprotective garment. By providing at least two detectors with different dose responses in a single dosimeter, in accordance with embodiments of the present invention, various advantages are provided. It shall be clear that this provides an improved ease of use and reduced risk of incorrect use and misplacement. It is also clear that this may provide advantages in terms of manufacture, handling and automatic readout. However, another important advantage can be found in that at least one additional degree of freedom can be used for optimizing the estimate of effective dose obtained by the dosimeter readout. Where in the prior art method of double dosimetry one dosimeter has a response that may be inevitably limited by the attenuation of radiation by the radioprotective garment before impinging on the dosimeter, in embodiments of the present invention, a detector in the single dosimeter can be optimized to have a different response, even though it may share some qualities such as being heavily filtered, in order to obtain a better effective dose estimate.

The plurality of reference exposure conditions comprises an exposure to a planar photon wave, e.g. a unidirectional photon beam, propagating in the reference direction 4, e.g. as indicated by the plurality of arrows 4 in FIG. 4. Furthermore, this planar photon wave has an energy distribution corresponding to an X-ray radiation quality obtainable by a peak X-ray tube voltage of 80 kV when filtered by 0.50 mm Cu and 4.00 mm Al. This X-ray radiation quality corresponds to the wide X-ray spectrum W -80 as defined by the ISO 4037-1 standard.

The plurality of reference exposure conditions also comprises an exposure to a planar photon wave, e.g. a unidirectional photon beam, propagating along a direction at an angle of 45° in relation to the reference direction 4. For example, the angle of 45° may be an angle of 45° toward the left side of the body of the human adult, an angle of 45° toward the right side of the body, an angle of 45° in the inferior direction of the body or an angle of 45° in the superior direction of the body. Furthermore, this planar photon wave has an energy distribution as referred to hereinabove, i.e. the X-ray radiation quality corresponding to the wide X-ray spectrum W -80 as defined by the ISO 4037-1 standard.

The plurality of reference exposure conditions also comprises an exposure to a planar photon wave, e.g. a unidirectional photon beam, propagating along a direction at an angle of 60° in relation to the reference direction 4. For example, the angle of 60° may be an angle of 60° toward the left side of the body of the human adult, an angle of 60° toward the right side of the body, an angle of 60° in the inferior direction of the body or an angle of 60° in the superior direction of the body. Furthermore, this planar photon wave has an energy distribution as referred to hereinabove, i.e. the X-ray radiation quality corresponding to the wide X-ray spectrum W -80 as defined by the ISO 4037-1 standard.

Additionally, the plurality of reference exposure conditions may comprise other exposure conditions, e.g. corresponding to other beam qualities or other angles of incidence. For example, following table of X-ray qualities may be used in defining reference exposure conditions: the Narrow (N) and Wide (W) spectra series defined by ISO 4037-1 and the RQR series defined by IEC 61267. The maximum energies of these series range from 30 keV to 120 keV. The mean energies, tabulated for informative purposes, may be calculated from X-ray spectra obtainable by using the spectrum generator contained in IPEM Report 78.

| Quality | Tube voltage (keV) | Filtration | | | Mean energy (fluence) (keV) |
|---------|--------------------|-----------|---------|---------|------------------------------|
|         |                    | Sn (mm)   | Cu (mm) | Al (mm) |                              |
| N-30    | 30                 | -         | -       | 4.00    | 24.3                         |
| N-40    | 40                 | -         | 0.21    | 4.00    | 32.9                         |
| N-60    | 60                 | -         | 0.60    | 4.00    | 47.5                         |
| N-80    | 80                 | -         | 2.00    | 4.00    | 64.8                         |
| N-100   | 100                | -         | 5.00    | 4.00    | 83                           |
| N-120   | 120                | 1.00      | 5.00    | 4.00    | 100.4                        |
| W-60    | 60                 | -         | 0.30    | 4.00    | 44.6                         |
| W-80    | 80                 | -         | 0.50    | 4.00    | 56.5                         |
| W-110   | 110                | -         | 2.00    | 4.00    | 79.1                         |
| RQR2    | 40                 | -         | -       | 2.49    | 28                           |
| RQR4    | 60                 | -         | -       | 2.68    | 36.4                         |
| RQR6    | 80                 | -         | -       | 2.99    | 44.3                         |
| RQR7    | 90                 | -         | -       | 3.18    | 48                           |
| RQR8    | 100                | -         | -       | 3.36    | 51.4                         |
| RQR9    | 120                | -         | -       | 3.73    | 57.4                         |

As an example, embodiments of the present invention not being limited thereto, the effective dose of an adult human anthropomorphic model wearing a lead-based radioprotective apron and thyroid protection shield are discussed hereinbelow, for the reference exposure conditions described hereinabove and an additional range of suitable reference conditions. The effective thickness of the lead-based radioprotective apron was 0.5 mm Pb, however embodiments of the present invention would also apply to different thicknesses, different apron compositions and different types of radioprotective garments, e.g. by applying suitable reference effective dose values as function of energy and angle of incidence, as may be known in the art or may be easily obtainable by simple experiments or simulations. FIG. 5 shows maximum and minimum limits, corresponding to the 40% to 160% range specified hereinabove, for the dose response of the dosimeter, e.g. of the predetermined linear combination applied to the detector readings, per incident air kerma ($D_{dosimeter}/K_{air}$) for exposures to unidirectional photon beams with an angle of incidence of 0° for 15 different x-ray quality spectra.

The dose response of the dosimeter in accordance with embodiments of the present invention, e.g. the output of the predetermined linear combination of the detector readings, is within $\pm 60\%$ of the value of the effective dose for the same conditions of exposure, e.g. for a 0° irradiation geometry with unidirectional photon beams with one of the x-ray qualities as mentioned. This means that the maximum possible overestimation and underestimation of the effective dose with a dosimeter 1 according to embodiments are respectively +60% and -60%, insofar the reference conditions can be sufficiently generalized to typical exposure conditions encountered by the adult human while using the dosimeter.

The same maximum and minimum limits relative to the effective dose are shown in FIG. 6 for exposures to photon beams with angles of incidence between -60° and +60° parallel to either the transverse or the sagittal plane of the body, and for different x-ray quality spectra with maximum energy between 30 and 120 keV. The angle $\psi$ can be interpreted as either the angle $\phi$ of incidence of a photon beam parallel to the transverse plane of the body or as the angle $\theta$ of incidence of a photon beam parallel to the sagittal plane of the body.

The values of the effective dose per unit of incident air kerma, in this example relating to a dosimeter according to embodiments for estimating an effective dose of a person wearing a radioprotective garment in the form of a 0.5 mm lead radioprotective apron and a protective thyroid shield, are tabulated hereinbelow for unidirectional photon beams with different standard radiation qualities, parallel to the transverse plane of the body and with an angle of incidence $\phi$. Negative and positive angles correspond to photon beams coming from the left and the right side of the body, respectively.

| Radiation quality | Angle of incidence ($\phi$) | | | | |
|---|---|---|---|---|---|
| | -60° | -45° | 0° | 45° | 60° |
| N-30 | 0.015 | 0.014 | 0.011 | 0.013 | 0.013 |
| N-40 | 0.042 | 0.038 | 0.028 | 0.033 | 0.037 |
| N-60 | 0.111 | 0.096 | 0.074 | 0.082 | 0.093 |
| N-80 | 0.229 | 0.222 | 0.232 | 0.195 | 0.194 |
| N-100 | 0.319 | 0.330 | 0.361 | 0.296 | 0.276 |
| N-120 | 0.278 | 0.272 | 0.278 | 0.242 | 0.240 |
| W-60 | 0.093 | 0.081 | 0.061 | 0.069 | 0.079 |
| W-80 | 0.165 | 0.153 | 0.144 | 0.133 | 0.139 |
| W-110 | 0.283 | 0.286 | 0.305 | 0.254 | 0.244 |
| RQR2 | 0.023 | 0.020 | 0.016 | 0.019 | 0.020 |
| RQR4 | 0.046 | 0.041 | 0.031 | 0.036 | 0.040 |
| RQR6 | 0.078 | 0.070 | 0.060 | 0.061 | 0.066 |
| RQR7 | 0.097 | 0.090 | 0.083 | 0.079 | 0.083 |
| RQR8 | 0.115 | 0.108 | 0.102 | 0.095 | 0.098 |
| RQR9 | 0.143 | 0.136 | 0.131 | 0.120 | 0.122 |

The values of the effective dose per unit of incident air kerma, in this example relating to a dosimeter according to embodiments for estimating an effective dose of a person wearing a radioprotective garment in the form of a 0.5 mm lead radioprotective apron and a protective thyroid shield, are tabulated hereinbelow for unidirectional photon beams with different standard radiation qualities, parallel to the sagittal plane of the body and with an angle of incidence $\theta$. Negative and positive angles correspond to photon beams coming from below and above, respectively.

| Radiation quality | Angle of incidence ($\theta$) | | | | |
|---|---|---|---|---|---|
| | -60° | -45° | 0° | 45° | 60° |
| N-30 | 0.008 | 0.010 | 0.011 | 0.013 | 0.010 |
| N-40 | 0.019 | 0.023 | 0.028 | 0.032 | 0.026 |
| N-60 | 0.043 | 0.053 | 0.074 | 0.076 | 0.060 |
| N-80 | 0.082 | 0.126 | 0.232 | 0.175 | 0.123 |
| N-100 | 0.127 | 0.202 | 0.361 | 0.267 | 0.186 |
| N-120 | 0.109 | 0.162 | 0.278 | 0.224 | 0.164 |

(continued)

| Radiation quality | Angle of incidence ($\theta$) | | | | |
|---|---|---|---|---|---|
| | **-60°** | **-45°** | **0°** | **45°** | **60°** |
| W-60 | 0.037 | 0.045 | 0.061 | 0.065 | 0.051 |
| W-80 | 0.060 | 0.085 | 0.144 | 0.120 | 0.088 |
| W-110 | 0.110 | 0.171 | 0.305 | 0.230 | 0.162 |
| RQR2 | 0.012 | 0.014 | 0.016 | 0.018 | 0.015 |
| RQR4 | 0.020 | 0.025 | 0.031 | 0.034 | 0.027 |
| RQR6 | 0.035 | 0.040 | 0.060 | 0.057 | 0.043 |
| RQR7 | 0.038 | 0.052 | 0.083 | 0.073 | 0.054 |
| RQR8 | 0.045 | 0.063 | 0.102 | 0.087 | 0.064 |
| RQR9 | 0.055 | 0.079 | 0.131 | 0.109 | 0.080 |

The predetermined linear combination may for example correspond to a least squares fit, or an alternative numerical optimization, of the weighting coefficients for the dose responses in the linear combination, such as to obtain an estimate within the range of 40% to 160% of an experimentally determined effective dose. For example, experiments with a physical human anthropomorphic phantom or computer simulations with a numerical anthropomorphic phantom model, including a physical radioprotective garment or a simulation model thereof, can be used to determine effective dose values for each of the plurality of reference exposure conditions, as a reference effective dose to be estimated by the linear combination.

It is an advantage of the use of at least two ionizing radiation detectors having different dose responses as a function dependent on photon energy and on an angle of incidence of radiation that it is possible to obtain a linear combination of the dose responses of the ionizing radiation detectors that estimates the effective dose of an adult human wearing a radioprotective garment within tight estimation limits for a number of representative irradiation conditions.

By introducing enough variation in the dose response as a function of photon energy and angle of incidence, e.g. by simple trial and error, and by allowing a number of detectors that is large enough, a linear combination of the dose readout can be produced that provides a good estimate of the effective dose.

Furthermore, specific embodiments of the present invention may advantageously comprise as few as two detectors by selection of the dose response as function of energy and angle of incidence as described further hereinbelow. Nevertheless, it shall be clear to the person in the art that adding more than two detectors may further improve on the effective dose estimate, e.g. at a higher material and readout cost.

In embodiments according to the present invention, the dose response of a first ionizing radiation detector 5 of the at least two ionizing radiation detectors may be at least five times higher than the dose response of a second ionizing radiation detector 6 of the at least two ionizing radiation detectors for incident photon radiation having photon energies in the range of 20 keV to 40 keV, e.g. planar photon waves having energies in this range and propagating along the reference direction 4. Furthermore, the dose response of the first ionizing radiation detector 5 may be less than three times higher than the dose response of the second ionizing radiation detector 6 for incident photon radiation having photon energies in the range of 75 keV to 85 keV, e.g. planar photon waves having this energy distribution and propagating along the reference direction 4. Thus, the first ionizing radiation detector may be more sensitive in the lower range of X-ray energies than the second ionizing radiation detector, while the response of the second ionizing radiation detector may be relatively stronger for higher energies than for lower energies, such that for higher energies its sensitivity may be still lower but closer to that of the first ionizing radiation detector.

In embodiments according to the present invention, the dose response of a first ionizing radiation detector 5 of the at least two ionizing radiation detectors may be at least five times higher than the dose response of a second ionizing radiation detector 6 of the at least two ionizing radiation detectors for incident photon radiation having an X-ray spectrum as defined by Narrow spectra N-30 and/or N-40 of ISO 4037-1, as referred to hereinabove, e.g. planar photon waves having said energy distribution and propagating along the reference direction 4. Furthermore, the dose response of the first ionizing radiation detector 5 may be less than three times higher than the dose response of the second ionizing radiation detector 6 for incident photon radiation having an X-ray spectrum as defined by Narrow spectrum N-100 of ISO 4037-1, e.g. planar photon waves having said energy distribution and propagating along the reference direction 4. Thus, the first ionizing radiation detector may be more sensitive in the lower range of X-ray energies, while the response of the second ionizing radiation detector may be relatively stronger for higher energies than for lower energies when compared to the first ionizing radiation detector.

In embodiments according to the present invention, the first ionizing radiation detector 5 may comprise a radiation sensitive element and a radiation filter for filtering radiation incident on the radiation sensitive element, e.g. a thermoluminescent detector. The filter may be adapted for attenuating photon radiation having photon energies in the range of 20 keV to 40 keV by a transmittance factor in the range of 0.20 to 0.60.

For example, FIG. 7 and FIG. 8 show exemplary dose responses per unit of air kerma for the respectively the first and the second ionizing radiation detector, as a function of photon energy and for different angles of incidence. FIG. 9 and FIG. 10 show the exemplary dose responses per unit of air kerma for respectively the first and the second ionizing radiation detection, for different standard photon radiation qualities and for different angles of incidence.

As also supported by the description provided hereinbelow in relation to examples of embodiments of the present invention, the effective dose of an adult human wearing a radioprotective garment, such as a radioprotective lead or non-lead apron and/or a thyroid shield, as function of photon energy and angle of incidence with respect to the anterior-posterior axis of the body, may correspond particularly well to a linear combination of a first dose response that has a reduced sensitivity to low energies, e.g. below and/or about 30 keV, yet a good sensitivity to higher energies, and a second dose response that has, not unlike the radiation filtering provided by a radioprotective garment, a reduced sensitivity in a wider energy range, e.g. a reduced sensitivity to energies below 60 keV.

Furthermore, in embodiments according to the present invention, the dose response per unit of air kerma of the first ionizing radiation detector 5 may be substantially independent of the angle of incidence with respect to the reference direction over a range of the angle of incidence with respect to the reference direction from 0° to at least 45°, e.g. to 60°, or even up to substantially 75°. "Substantially independent" may refer in this instance to a difference in dose response per unit of kerma of less than 20%, e.g. 15%, for example less than 10%, e.g. preferably less than 5%, for monoenergetic photons of any predetermined energy in the range of 30 keV to 120 keV impinging on the detector at any angle of incidence in the range of 0° to 60°, or even in the range of 0° to 75°, with respect to the dose response per unit of kerma for monoenergetic photons of the same predetermined energy impinging on the detector at an angle of incidence of 0°, e.g. less than 1°. The relative deviation of less than 20%, 15%, 10% or even less than 5% may refer to a difference relative to the latter dose response per unit of air kerma for photons impinging at an angle of incidence of 0°. For example, for energies in the range of 30 keV to 120 keV, the angular dependence relative to 0 degrees may be less than or equal to 5% for any angle in the range of 0° to 75 degrees, while for an energy of about 20 keV, e.g. for an energy of 20 keV, the angular dependence may reach less than 7%, e.g. 6%, for an angle of 60 degrees and less than 20%; e.g. 19%, for an angle of 75 degrees. In embodiments according to the present invention, the first ionizing radiation detector 5 may comprise a radiation sensitive element and a radiation filter for filtering radiation incident on the radiation sensitive element, e.g. a thermoluminescent detector. The filter may comprise a substantially hemispherical volume of a plastic polymer material, in which the hemispherical volume is shaped as one half of a sphere having a radius in the range of 3 mm to 8 mm.

As also supported by the description provided hereinbelow in relation to examples of embodiments of the present invention, the effective dose of an adult human wearing a radioprotective garment, such as a radioprotective lead or non-lead apron and/or a thyroid shield, as function of photon energy and angle of incidence with respect to the anterior-posterior axis of the body, may correspond particularly well to a linear combination of a first dose response that has a reduced sensitivity to low energies, e.g. below and/or about 30 keV, yet a good sensitivity to higher energies, and a second dose response that has, not unlike the radiation filtering provided by a radioprotective garment, a reduced sensitivity in a wider energy range, e.g. a reduced sensitivity to energies below 60 keV, in which the first dose response is substantially independent of the angle of incidence over at least 60°, e.g. with respect to the anterior-posterior direction of the human body.

The advantage of the first ionizing radiation detector having a reduced low-energy response and only weak angular dependence may be understood by following considerations, embodiments of the present invention not intended to be limited by such theoretical considerations. The contribution to the effective dose by tissues and organs that are unshielded or only partially shielded by the protective garment are typically only shielded by other human tissues attenuating the radiation before reaching such tissue or organ. The effective dose contribution to such tissue or organ may therefore be less sensitive to low incident photon energies, and may have a weak angular dependence, as the radiation attenuation of human tissues is too weak to show a strong dependence on tissue depth, and hence angle of incidence, for higher energies.

In a dosimeter 1 being part of the present invention, the dose response per unit of air kerma of the second ionizing radiation detector 6 for incident photon radiation of 80 keV propagating along the reference direction may be greater than or equal to 2.0 times the response per unit of air kerma of the second ionizing radiation detector 6 for incident photon radiation of 60 keV propagating along the reference direction. Furthermore, the dose response per unit of air kerma of the second ionizing radiation detector 6 for incident photon radiation of 80 keV propagating along the reference direction may be greater than or equal to 1.4 times the dose response per unit of air kerma of the second ionizing radiation detector for incident photon radiation of 100 keV propagating along said reference direction.

Therefore, the dose response per unit of air kerma of the second ionizing radiation detector 6 may have a characteristic peak between 60 keV and 100 keV, e.g. as may correspond to a K-edge spectral feature of a high atomic number (Z) material such as lead or bismuth. It is to be noted that such high Z materials may be typically used as material for radioprotective garments, such that the second ionizing radiation detector 6 may have a dose response that shows some similarity to the attenuation of such radioprotective garment. Thus, a linear combination of the dose readout of the first ionizing radiation detector 5, which could be related to an effective dose component of less than optimally shielded organs and tissues, and the dose readout of the second ionizing radiation detector 6, which could be related to an effective dose component of organs and tissues that are substantially shielded by the radioprotective garments, may offer a good estimate of effective dose.

Furthermore, the dose response per unit of air kerma of the second ionizing radiation detector 6 for incident photon radiation of 80 keV propagating in a direction at an angle of 60° with respect to the reference direction may be less than 1.5, for example 1.4 or even less than 1.4, times the dose response per unit of air kerma of the second ionizing radiation detector for incident photon radiation of 100 keV propagating in the direction at the angle of 60° with respect to the reference direction.

An advantage of such angular dependence of the dose response of the second ionizing radiation detector may be understood, embodiments of the present invention not being limited by such theoretical considerations, as corresponding to a strong angular dependence of effective dose due to an increased path length for radiation penetrating the radioprotective garment at an angle. Whereas for the unprotected human tissues a slight change in angle of incidence may cause little change in the radiation quality propagating through these tissues, for the protected human tissues, a slight change in angle may imply a sufficiently different path length through the radioprotective material to cause a substantial change in radiation quality when reaching the protected tissue.

In embodiments according to the present invention, the first ionizing radiation detector 6 may comprise a radiation sensitive element and a radiation filter for filtering radiation incident on the radiation sensitive element, such as a thermoluminescent detector. The filter may be adapted for attenuating photon radiation propagating along the reference direction 4 such as to obtain a transmittance of the photon radiation as function of photon energy that is substantially proportional to the transmittance of photon radiation as function of photon energy through said radioprotective garment.

In embodiments according to the present invention, the first ionizing radiation detector 6 may comprise a radiation sensitive element and a radiation filter for filtering radiation incident on the radiation sensitive element, such as a thermoluminescent detector. The filter may be adapted for attenuating photon radiation propagating along the reference direction 4 and having energies in the range of 50 keV to 60 keV by a transmittance factor in the range of 0.02 to 0.25.

The filter of the second ionizing radiation detector may comprise a first filtering element for attenuating photon radiation propagating along the reference direction 4 before impinging on the radiation sensitive element, and a second filtering element for attenuating photon radiation propagating along a direction at an angle with the reference direction 4, in which this angle is in the range of 30° to 80°, e.g. in the range of 45° to 80°, e.g. 60° or 75°. This first filtering element may comprise a light material, e.g. Ti or Al, such as to have an effect mainly on the dose response at low energies, e.g. in the range of 20 to 60 keV.

A personal radiation dosimeter being part of the present invention may have dose response characteristics, such as energy and angular dependence of the dose response, similar to those of the effective dose characteristics, e.g. energy and angular dependence, of a person wearing a radioprotective garment, e.g. a lead apron and thyroid shield, under conditions of radiation exposure representative of medical staff working in interventional radiology and cardiology. For example, the personal radiation dosimeter may be specifically adapted for having dose response characteristics similar to those of an effective dose model, e.g. obtained by simulations or experimental measurements.

A personal radiation dosimetry system 20 is shown in FIG. 11. This personal radiation dosimetry system 20 comprises a personal radiation dosimeter 1 and a reader 21 for reading out said personal radiation dosimeter 1. The reader 21 is adapted for determining values representative of the dose collected by each of the at least two ionizing radiation detectors of the personal radiation dosimeter 1. The system 20 further comprises a processing device 22, e.g. a computer or integrated processing device, configured for, e.g. programmed for, estimating an effective dose registered by the personal radiation dosimeter 1 by calculating the predetermined linear combination, as referred to in relation to the first aspect of the present invention, of the values determined by the reader 21.

For example, the reader 21 may be integrated in the dosimeter 1, e.g. may form a readout circuit of an active dosimeter, or may be separate, e.g. may form a reader as known in the art for determining a dose value collected by a passive ionizing radiation detector, e.g. a TLD reader or OSLD reader.

It is an advantage of embodiments of the present invention that an estimate of the effective dose of a medical staff member wearing a radioprotective garment, such as a radioprotective apron and/or thyroid shield, may be directly obtained by reading out the dosimeter, e.g. the readout process of the dosimeter may not require the application of a correction factor or correction factors for the specific purpose of improving the uncertainty of the effective dose estimation, e.g. to impose a safe margin of underestimation for particular irradiation conditions at the cost of an increased margin of overestimation for other irradiation conditions, as in personal dosimetry methodologies known in the art.

In a personal radiation dosimetry system according to embodiments of the present invention, the processing device may be adapted for calculating the predetermined linear combination of the values to obtain an effective dose estimate, in which this effective dose estimate may have a dose response per unit of air kerma to a planar photon wave having an energy distribution corresponding to N-100, as defined hereinbelow, and that impinged on the dosimeter propagating along the reference direction, that is greater than or equal to 1.2 times the dose response per unit of air kerma to a planar photon wave having an energy distribution corresponding to N-80, as defined hereinbelow.

In a personal radiation dosimetry system according to embodiments of the present invention, the processing device may be adapted for calculating the predetermined linear combination of the values to obtain an effective dose estimate, in which this effective dose estimate may have a dose response per unit of air kerma to a planar photon wave having an energy distribution corresponding to N-100, as defined hereinbelow, and that impinged on the dosimeter propagating along the reference direction, that is greater than or equal to 1.1 times the dose response per unit of air kerma to a planar photon wave having an energy distribution corresponding to N-120, as defined hereinbelow, and that impinged on the dosimeter propagating along the reference direction.

In a further aspect, the present invention also relates to a personal radiation dosimetry method for estimating an effective dose of an adult human wearing a radioprotective garment. The method comprises positioning at least two ionizing radiation detectors on an exterior surface of the radioprotective garment while worn, such that each of the at least ionizing radiation detectors is less than 10 cm, e.g. less than 5 cm or even less than 3 cm, separated in distance from each other ionizing radiation detector. The at least two ionizing radiation detectors have substantially different dose responses as a function of a photon energy and an angle of incidence of radiation with respect to a reference direction. This reference direction is directed toward the body of adult human, e.g. may correspond to a frontal angle of incidence with respect to the body. The method further comprises detecting ionizing radiation by these ionizing radiation detectors.

The method also comprises determining values representative of the dose collected by each of the at least two ionizing radiation detectors. The method further comprises estimating an effective dose received by the adult human by calculating a predetermined linear combination of said values. This predetermined linear combination of the dose responses of the at least two ionizing radiation detectors corresponds to an estimate in the range of 40% to 160% of the effective dose received by the adult human under each of a plurality of reference exposure conditions.

The plurality of reference exposure conditions comprises at least an exposure to a substantially planar photon wave propagating in the reference direction, an exposure to a substantially planar photon wave propagating along a direction at an angle of 45° with the reference direction and an exposure to a substantially planar photon wave propagating along a direction at an angle of 60° with the reference direction. Each of these planar photon waves has an energy distribution corresponding to one of the following :

an X-ray radiation quality obtainable by a peak X-ray tube voltage of 80 kV and filtered by 0.50 mm Cu and 4.00 mm Al, this X-ray radiation quality corresponding to the wide X-ray spectrum W-80 as defined by the ISO 4037-1 standard,
an X-ray radiation quality obtainable by a peak X-ray tube voltage of 60 kV and filtered by 0.60 mm Cu and 4.00 mm Al, this X-ray radiation quality corresponding to the narrow X-ray spectrum N-60 as defined by the ISO 4037-1 standard, and
an X-ray radiation quality obtainable by a peak X-ray tube voltage of 60 kV and filtered by 0.30 mm Cu and 4.00 mm Al, this X-ray radiation quality corresponding to the wide X-ray spectrum W -60 as defined by the ISO 4037-1 standard.

In a method according to embodiments of the present invention, calculating the predetermined linear combination of the values may comprise calculating an effective dose estimate having a dose response per unit of air kerma to a planar photon wave having an energy distribution corresponding to N-100, as defined hereinbelow, and that impinged on the detectors propagating along the reference direction, that is greater than or equal to 1.1 times the dose response per unit of air kerma to a planar photon wave having an energy distribution corresponding to N-120, as defined hereinbelow, and that impinged on the detectors propagating along the reference direction.

Embodiments of the present invention are illustrated by the examples described hereinbelow, the present invention not intended to be limited by such examples.

The design of a dosimeter in accordance with embodiments of the present invention may be assisted by means of Monte Carlo radiation transport simulations. Such simulations may be carried out for any type of detection technique, e.g. for any types of passive or active detector, a suitable dosimeter in accordance with embodiments of the present invention may be produced in accordance with exemplary methodology described in the examples hereinbelow. Furthermore, a dosimeter in accordance with embodiments can be specifically designed, in accordance with the exemplary methodology below, for diverse radioprotective garments, e.g. different materials, thicknesses of attenuating materials and/or different types and designs of garment.

An example of the design of a dosimeter in accordance with embodiments of the present invention is shown hereinbelow for LiF:Mg,Ti thermoluminescent detectors (TLDs). The example relates to two detectors in one dosemeter holder, with different corresponding filtration elements. A first detector is provided with strong filtration, e.g. comprising lead amongst other materials, while a second detector is provided with light filtration, e.g. polyvinyl chloride (PVC).

However, the specific design of a dosimeter in accordance with embodiments of the present invention may be strongly dependent on the particular characteristics of the radiosensitive elements used, e.g. the energy response and angular dependency of response. For example, the radiosensitive material, the conversion method for producing a readout signal, and the thickness and shape of the radiosensitive detector may strongly affect the energy and angular responses of the radiosensitive element. Referring to FIG 27, the energy dependence of the dose absorbed by different radiation sensitive element materials per incident air kerma is shown for unidirectional mono-energetic photon beams with energies between 20 and 120 keV. It will be observed that the energy dependence of the dose absorbed by the radiation detector strongly depends on the choice of radiosensitive material. FD-7 is a type of silver activated phosphate glass (Asahi Techno Glass Corporation, Shizuoka, Japan) that possesses radiophotoluminescent (RPL) properties useful for dosimetry. Radiosensitive materials such as the TLD materials LiF:Mg,Ti and LiF:Mg,Cu,P, and the OSL material BeO show a dose response with a weak dependency on the photon energy between 20 and 120 keV. However, the dose responses of the OSL detector material Al2O3:C and the RPL detector material FD-7 are much more dependent on the photon energy and can be, respectively, up to 2.2 and 3.5 times higher than that of LiF:Mg,Ti TLD for the same incident air kerma, for photon energies below 70 keV.

Moreover, detectors of different radiosensitive materials are commercially available in different shape formats, which may also influence the energy and angular dependency of the dose response, in particular at low photon energies. Al2O3:C detectors can be obtained, for example, in the form of thin disks of about 0.2 mm thickness made of Al2O3:C powder mixed with a polyester binder (Landauer, Glenwood, Illinois, USA), whereas FD-7 glass RPL detectors can be obtained, for example, in the form of small plates of 1 mm and 1.5 mm thickness or small cylinders of 1.5 mm diameter and different length sizes (see FD-7 detectors inside SC-1, GD-450 and Dose Ace dosimeters from Chiyoda Technol Corporation, Yokohama, Japan).

For example, because of the different dose responses observed for ionizing radiation detectors made of different materials and shape formats, the dose response ($D_{combined}/K_{air}$) of a dosimeter having the same design as shown in FIG. 29 and FIG. 30, but based on, for example, FD-7 glass RPLDs that are 1.5 mm-thick, will be different than the dose response of the same dosimeter design using LiF:Mg,Ti TLDs with a thickness of 0.9 mm, as in the example shown in FIG 29 and FIG 30. While this design can provide a good estimate of effective dose for a person wearing a radioprotective garment when using such LiF:Mg,Ti TLD radiation sensitive elements, in accordance with embodiments of the present invention, as will be discussed further in detail hereinbelow, the dose response of the same dosimeter design based on FD-7 glass RPLDs (or another alternative type of radiosensitive detector) could actually be so different from that obtained with the exemplary dosimeter using LiF:Mg,Ti TLDs that the estimation of the effective dose with radioprotective garments with an accuracy in the range of -60% to +60%, might not be achievable and, therefore, some features of the dosimeter would need to be adapted such as, for instance, the material and/or shape of the filters, and/or the incorporation of other elements around the radiation detectors of the dosimeter. Such situation is illustrated in FIG. 37, which shows the ratio of the effective dose $D_{combined}$ as would be estimated with a dosimeter of similar design as shown in FIG. 29 and FIG. 30, discussed further hereinbelow, but with detectors of FD-7 glass (RPLDs) having a thickness of 1.5 mm, and a benchmark effective dose $E_{RP\ garments}$ for a person wearing a radioprotective garment, which is also discussed in detail further hereinbelow by reference to FIG. 15, FIG. 16, FIG. 17 and FIG. 18. For a photon beam parallel to the sagittal plane of the body with an angle of incidence of -60% (e.g. for photon rays coming from below), the ratio $D_{combined}/E_{RP-garments}$ is above 1.9 (i.e. corresponding to an overestimation of the effective dose with RP garments of 90%) for the X-ray qualities N-60 and W-60. Nevertheless, in such example appropriate values, e.g. optimized values, of constants $\alpha$ and $\beta$ for a linear combination of both detector values were used in order to obtain the minimum possible over- and underestimation of the effective dose.

Therefore, the example provided hereinbelow should be seen in the light of an exemplary methodology for designing a dosimeter in accordance with embodiments of the present invention for an arbitrary, suitable selection of radiation sensitive elements, here applied to the specific example of a pair of TLDs having the composition and element shape as described. Nevertheless, even though such specific design is highly dependent on the choice of material and geometric parameters of the radiation sensitive elements, adequate directions are provided by this example to enable the person skilled in the art to determine a suitable dosimeter design, e.g. a suitable filter combination and filter properties associated therewith, by routine test and simulation procedures, as known in the art and discussed in present description, to obtain a dosimeter in accordance with embodiments of the present invention for a different combination of radiation sensitive elements. Furthermore, the result of such routine optimization can be directly and positively verified by tests and/or procedures known to the person skilled in the art and/or adequately specified in present description without undue experimentation. For example, the reference exposure conditions referred to in present description allow a standardized test procedure to be carried out on a standardized anthropomorphic phantom, in simulation or in experiment, using standardized radiation qualities.

A linear algorithm may be used to calculate the dose of the dosimeter, and thus the estimated effective dose, from the dose received by the detectors. The uncertainty of the dosimeter in accordance with embodiments in this example is within $\pm 50\%$ of the calculated value of the effective dose with radioprotective (RP) garments, e.g. over- and underestimation of the effective dose are always below +50% and -50%, respectively, for radiation exposure fields representative of medical staff working in IR and IC. Nevertheless, further optimization of a dosimeter may be possible in accordance with embodiments of the present invention to achieve even lower uncertainties.

The radiation fields studied include unidirectional photon beams with different radiation qualities from IEC 61267 RQR series and ISO 4037-1 Narrow and Wide spectra series with maximum energy between 30 and 120 keV, and with angles of incidence between -60°, 0° and 60° (where 0° corresponds to the Antero-Posterior geometry irradiation) parallel to either the transverse or the sagittal plane of the body.

In a first step of this exemplary methodology for designing a dosimeter in accordance with embodiments of the present invention, the effective dose, taking the RP garments into account, is calculated. This effective dose may then serve as a reference for optimizing the energy and angular response of the dosimeter. In this example, the ICRP Reference Computational Male Phantom was equipped with a mathematically-defined radioprotective apron and thyroid collar, as shown in FIG. 12, and its effective dose was calculated through Monte Carlo simulations for photon beams with energies and angles of incidence of interest in IR and IC. In these calculations RP garments made of 0.5 mm lead (Pb) were modelled, but RP garments with other characteristics, e.g. different materials such as composites with or without lead, and/or other thicknesses, such as 0.35 mm lead, may also be modelled such as to calculate the effective dose with such other RP garments.

Effective dose with RP lead garments $E_{RP\text{-}gorments}$ per air kerma free-in-air $K_{air}$ conversion coefficients were calculated for whole-body unidirectional photon beams with standard radiation quality spectra relevant in fluoroscopy and personal radiation protection. These spectra include the RQR series from IEC 61267 and narrow (N) and wide (W) spectra series from ISO 4037-1, with maximum photon energy between 30 and 120 keV. The spectrum generator from IPEM Report 78 was used to generate the x-ray energy spectra of the standard radiation qualities used in the simulations. Specifications of these spectra are described in a table provided hereinabove.

The angular variation of the effective dose was calculated for photon beams parallel to the transverse plane of the body with angles of incidence $\varphi$ between +60°, e.g. for photons coming from right side of phantom, 0°, e.g. in an Antero-Posterior (AP) irradiation geometry, and -60°, e.g. for photons coming from left side of phantom, as illustrated in FIG. 13; and also for photon beams parallel to the sagittal plane of the body for angles of incidence ($\vartheta$) between -60°, e.g. photons coming from below, 0° (AP) and +60°, e.g. photons coming from above, as shown in FIG. 14.

Calculations were performed using the MCNPX code version 2.7.0 from Los Alamos National Laboratory, USA. Red bone marrow and bone surface doses were estimated using the method of the mass-averaging of the spongiosa and medullary cavity doses described in ICRP Publication 116. Effective dose was calculated following the 2007 Recommendations of the ICRP (Report 103).

Coefficients of effective dose with RP lead garments ($E_{RP\text{-}gorments}$) per incident air kerma ($K_{air}$) are shown in the figures for different photon beam radiation qualities and angles of incidence. FIG. 15 and FIG. 16 correspond to the effective doses due to photon beams parallel to the transverse plane of the body coming respectively from the right and the left side of the phantom, e.g. with a positive or a negative angle of incidence $\varphi$. Similarly, the effective dose with lead garments was calculated for photon beams parallel to the sagittal plane of the body with positive or negative angles of incidence $\vartheta$, e.g. coming from up or from down, and are shown respectively in FIG. 17 and FIG. 18. All these figures show the energy and angular dependence of the effective dose when using RP garments made of lead.

For narrow spectra series (N-) the highest coefficient of $E_{RP\text{-}garments}/K_{air}$ is observed for the N-100 spectrum and the effect of the absorption peak of lead at 88 keV becomes visible at the N-120 spectrum, having max. energy of 120 keV and mean energy around 100.4 keV. For wide spectra (W-) and RQR series the effect of the absorption peak of lead does not become visible. Furthermore, a stronger angular dependence is observed for photon beams parallel to the sagittal plane of the body compared to photons parallel to the transverse plane.

| Energy (keV) | 0.5mm Pb | 0.35mm Pb | 0.25mm Pb |
|---|---|---|---|
| 20 | 0.006 | 0.0063 | 0.0063 |
| 30 | 0.023 | 0.023 | 0.032 |
| 40 | 0.049 | 0.051 | 0.061 |
| 50 | 0.085 | 0.116 | 0.178 |
| 60 | 0.165 | 0.260 | 0.386 |

(continued)

| Energy (keV) | 0.5mm Pb | 0.35mm Pb | 0.25mm Pb |
|---|---|---|---|
| 70 | 0.302 | 0.450 | 0.607 |
| 80 | 0.459 | 0.628 | 0.784 |
| 90 | 0.202 | 0.297 | 0.422 |
| 100 | 0.230 | 0.348 | 0.493 |
| 110 | 0.273 | 0.000 | 0.000 |
| 120 | 0.326 | 0.481 | 0.637 |

For illustrative purposes, the above table lists the effective dose per unit of air kerma, simulated in similar manner as the example discussed hereinabove, for different monoenergetic planar photon waves incident along the reference direction, e.g. for 0° frontal incidence on the body, having predetermined energies and for predetermined lead apron thicknesses.

The performance of prior art single and double dosimetry methodologies on estimating the effective dose with RP garments was assessed, in order to illustrate various advantages of the embodiments of the present invention. To this end, the energy and angular response of an $Hp(10)$ dosemeter was calculated for over-apron and under-apron -like conditions. This was achieved by calculating the dose received by a personal dosimeter 190 intended to measure $Hp(10)$ when it is placed over and under a 0.5 mm-thick lead shield 191 placed over an ISO water slab phantom 193, as shown in FIG. 19, for photon beams with different x-ray qualities with maximum energy between 30 and 120 keV and different angles of incidence. A realistic design of a dosimeter based on LiF:Mg,Ti thermoluminescent detectors (TLDs) used for measuring $Hp(10)$ was taken as example for modelling the $Hp(10)$ dosimeter. Different single dosimetry correction factors and double dosimetry algorithms were applied to the dose over the lead shield ($H_{over}$, $H_o$) and/or under the shield ($H_{under}$, $H_u$) as mentioned in the literature and the resulted corrected or algorithm-estimated dose was compared to the effective dose with RP lead garments previously calculated.

The energy and angular dependence of the $Hp(10)$ dosimeter's dose response when placed over an ISO water slab phantom is shown in FIG. 1, together with the energy and angular dependence of the $H_p(10)$ per air kerma coefficients as published in ICRP Publication 74. In practice this configuration is used for performance testing of $H_p(10)$ personal dosimeters (IEC 62387), as it simulates the backscatter conditions of a dosimeter when it is worn by a person directly on the chest, without wearing RP garments.

To simulate the dose received by the dosimeter when worn over and under RP garments conditions, the dosimeter was placed over and under a 0.5 mm lead shield covering an ISO slab phantom and its dose was calculated. Calculated values of $H_u$ (dosimeter under the shield) and $H_o$ (dosimeter over the shield) per incident air kerma are shown in FIG. 20 for different x-ray qualities from the ISO Narrow spectra series (N-) and angles of incidence, and in FIG. 2 for different monoenergetic photon energies.

Different single dosimetry (SD) correction factors and double dosimetry (DD) algorithms were applied to the calculated doses $H_o$ and $H_u$ and are summarized in the table hereinbelow. The obtained SD corrected doses ($D_{SD}$) and DD calculated doses ($D_{DD}$) were then compared to the effective dose with RP garments previously calculated.

FIG. 21 and FIG. 22 show the ratio between the dose obtained with the single dosimetry correction factor proposed by Huyskens *et al.* and the effective dose with RP garments due to photons parallel to the transverse and the sagittal planes of the body, respectively. In both figures it can be seen that for x-ray qualities with maximum photon energy below 80 keV (N-30, N-40 and N-60) this approach is overly conservative, as it overestimates the effective dose by a factor that goes from around 2.5 to up to more than 15. For qualities with higher energies (N-80, N-100 and N-120) the over-and underestimation stay within ±30% of the effective dose in the transverse plane, but in the sagittal plane the overestimation reaches a factor of around 1.2-2.8 for angles different than 0°. On the contrary, SD algorithms suggested in NCRP Report 122 and by Padovani *et al.* result in high underestimations of the effective dose going from -33% up to -90% (so $D_{SD}/E_{RP-garments}$ ratios between 0.67 and 0.10, respectively) depending on the plane of the body and the angle of incidence, for N-80, N-100 and N-120 photon qualities. For N-30 and N-40 qualities the same algorithms overestimate the effective dose by a factor that goes from 1.12 up to more than 4.

Similarly, in FIG. 23 and FIG. 24, the dose obtained with the double dosimetry algorithm proposed by Rosenstein and Webster and recommended by NCRP Report 122 is compared with the effective dose due to photons parallel to the transverse and the sagittal planes of the body, respectively. This algorithm tends to underestimate the effective dose for most of the x-ray qualities studied. all x-ray qualities with maximum photon energy above 40 keV (N-60, N80, N-100 and N-120). For N-60, N80, N-100 and N-120 the percentage of underestimation is between -27% and -76% ($D_{DD}/E_{RP-garments}$ ratios between 0.73 and 0.24, respectively) depending on the angle of incidence of the photon beam, in both planes; whereas for N-30 the effective dose is actually overestimated by a factor of 1.3-2.44 depending on the angle of incidence. Only for N-40 the over- and underestimation stays within ±50% of the effective dose.

The table hereinbelow shows several double and single dosimetry algorithms, known in the art, for the estimation of the effective dose with RP garments using a thyroid shield. More information on the algorithms referred to herein can be found in the publication by Järvinen et al. cited in the background section hereinabove.

Among the algorithms shown in the table hereinbelow, that suggested by Clerinx *et al.* seemed to be the one with the best performance, as shown in FIG. 25 and FIG. 26. This algorithm tends to overestimate the effective dose by a factor of up to 2.2 for x-ray qualities with maximum photon energy above 40 keV (N-60, N80, N-100 and N-120), except for photon beams parallel to the transverse plane with a ±60° angle of incidence. Also for N-30 and N-40 a high overestimation of the effective dose is observed (factor 1.93-7.3).

| Double dosimetry algorithm | A | b |
| --- | --- | --- |
| Wambersie and Delhove | 1 | 0.1 |
| Rosenstein and Webster | 0.5 | 0.025 |
| NCRP Report 122 | 0.5 | 0.025 |
| Swiss Ordinance | 1 | 0.05 |
| Franken and Huyskens | 1 | 0.033 |
| Sherbini and DeCicco | 1 | 0.07 |
| Von Boetticher *et al.* | 0.65 | 0.017 |
| Clerinx *et al.* | 1.64 | 0.075 |
| **Single dosimetry algorithm** | $\gamma$ | |
| NCRP Report 122 | 21 | |
| Huyskens *et al.* | 5 | |
| Padovani *et al.* | 33 | |

From these results, it can be observed that none of the tested personal dosimetry approaches appear to provide an estimation of the calculated effective dose with an over- or underestimation below or equal to ±60% for all the radiation fields studied here, which are representative of medical staff working in IR and IC.

In a second step of this exemplary methodology for designing a dosimeter in accordance with embodiments of the present invention, a design for a dosimeter in accordance with embodiments of the present invention is determined taking the calculated effective dose into account.

The design of the dosimeter may be selected such that the energy and angular dose response ($D_{dosimeter}(E_{photon}, \phi)$) is as similar as possible to that of the calculated effective dose with protective garments ($E_{RP\text{-}garments}(E_{photon}, \phi)$) or, in other words, the ratio between $D_{dosimeter}$ and $E_{RP\text{-}garments}$ is as close as possible to one for all photon energies and angles of incidence in the range of interest.

It shall be clear to the person skilled in the art that different factors determine the characteristics of the dose response of a dosimeter for given exposure conditions. For example, one factor may be related to the type of radiation sensitive elements used, e.g. the intrinsic dose response, material composition and geometry of the detectors. Another factor may be related to components around the radiation sensitive elements, such as filters, holders and supports, e.g. the material composition, geometry and position thereof.

The type of dosimetric detector determines the starting energy and angular dose response from which the dosimeter is built up and, in case of a passive detector, the dosimetry technique used for its readout. FIG. 27 shows the energy dependence of the dose absorbed by different passive detector materials per incident air kerma for unidirectional monoenergetic photon beams with energies between 20 and 120 keV. However, these values do not take into account the efficiency of each dosimetric material in transforming absorbed energy into emitted luminescence.

The material composition, thickness and geometry of filters and other elements around the detectors will modify the characteristics of the radiation field, e.g. the radiation type, energy, angle and fluence (i.e. intensity as number of rays), to which a detector is exposed for a given external radiation field, thus affecting the overall dose response thereof, e.g. the. energy dependence and angular dependence.

In designing a dosimeter in accordance with embodiments of the present invention, a number of parameters may be considered, e.g. the type and number of dosimetric detectors and the material composition, geometry and position of elements around the detector, e.g. the filters and supports. Thermo-luminescent detectors (TLDs) made of LiF:Mg,Ti have been considered in this example, but the use of other types of detectors is not excluded, e.g. optically stimulated luminescent detectors (OSLDs) like those made of e.g. BeO and $Al_2O_3$:C; or active detectors, e.g. such as a diode detector or a Direct Ion Storage (DIS) detector. Even though the design of filters and other elements around the detectors may vary depending on the specific type of detectors used in the dosimeter, the method for finding the optimized configuration may be substantially the same.

As an example, a dosimeter is described for the case of LiF:Mg,Ti detectors. In this example, filters, holders and supports have been selected for that specific type of detectors, e.g. for LiF:Mg,Ti TLDs. Coefficients of the absorbed dose to the dosimetric detectors of the new dosimeter per air kerma free-in-air ($K_{air}$) were calculated for different standard radiation quality spectra (Narrow and Wide spectra series from ISO 4037-1, RQR series from IEC 61267) and different angles of incidence (0°, 45°, 60°). Calculations were performed using the Monte Carlo code MCNPX 2.7.0.

Since this example relates to a dosimeter to be worn over the RP garments worn by medical staff, these conditions were recreated by performing simulations with the dosimeter design model 280 placed over an ISO water slab phantom 282, representing the body of the person, covered with 0.5 mm-thick sheet of lead 281, representing the lead apron, as shown in FIG. 28.

The exemplary dosimeter is adapted for estimating the effective dose of a human adult wearing a lead apron and thyroid collar, in accordance with the previously calculated reference effective dose, described hereinabove.

The exemplary dosimeter consists of two detectors $TLD_1$ and $TLD_2$, each detector comprising a LiF:Mg,Ti TLD as radiation sensitive element with different filtration. Both TLDs are modelled as solid discs of 0.9 mm height and 5 mm diameter. The geometry and configuration of filters and elements around each detector are shown respectively in FIG. 29 for $TLD_2$ and in FIG. 30 for $TLD_1$.

$TLD_2$ is placed under a thin filter made of lead (Pb, strong filtration). This filter is composed of 3 thin Pb disks each one with a thickness of 0.14 mm, so forming a total Pb thickness of 0.42 mm. The disks have different diameters (5 mm, 6 mm and 7 mm) and are placed concentrically one above the other, with the smallest disk on the top, and the largest disk at the bottom.

Around the TLD, at the top level, there is a 3 mm thick filter made of aluminium (Al) with an opening with the shape of an inverted cone giving space to the Pb filters. This is a filter for attenuating external radiation with high angles of incidence.

Below this Al filter, just at the top level of the TLD, a 0.3 mm thick filter made of titanium (Ti) is placed. This filter has a 6 mm diameter circular opening in the centre, exposing the TLD to a gap of air of 0.3 mm (thickness of Ti filter) between the TLD and the bottom Pb disk. Below the Ti filter, the TLD is hold by a piece of aluminium with a total thickness of 3.9 mm (3.0 mm of Al below the TLD). This piece is followed by a 0.5 mm-thick layer made of tungsten (W) and then, at the bottom, by a 2 mm-thick plate made of copper (Cu) that attenuates the backscattered radiation produced by the lead garments below the dosimeter. The Cu plate is the part of the dosimeter that will be in contact with (or close to) the external surface of the RP garments.

The flat filter made of Ti and the conical filter made of Al are representative of filters made of light materials, e.g. such as to have mainly an effect on the dose response at low energies, e.g. in the 20 keV to 60 keV range, at substantial angles of incidence, e.g. at 45° or 75°. The filter made of titanium may reduce the amount of backscatter coming from the Al support of 3.9mm below it, while the conical filter made of Al may also reduce the dose received by the detector at low energies. The 0.3 mm air gap between the Pb filter and the radiation sensitive TLD material also may have an effect on the angular dose response.

$TLD_1$ is placed under a light filter made of polyvinyl chloride (PVC) with a hemispherical shape that slightly absorbs low energy photons. A 3 mm-thick plate made of aluminium holds the TLD and the PVC filter around it. At the bottom, below the Al plate, a 2 mm-thick plate made of copper (Cu) is placed to attenuate backscattered radiation coming from the RP garments, in the same way as for $TLD_2$.

Exemplary values for dose response per unit of air kerma for TLD1 are provided in the table hereinbelow, for monoenergetic planar photon waves of predetermined energies and angles of incidence with respect to the reference direction.

| Energy (keV) | 0° | 45° | 60° | 75° |
| --- | --- | --- | --- | --- |
| 20 | 0.175 | 0.179 | 0.185 | 0.209 |
| 30 | 0.757 | 0.738 | 0.732 | 0.762 |
| 40 | 1.084 | 1.053 | 1.047 | 1.059 |
| 50 | 1.18 | 1.16 | 1.15 | 1.16 |
| 60 | 1.18 | 1.17 | 1.16 | 1.17 |

(continued)

| Energy (keV) | 0° | 45° | 60° | 75° |
|---|---|---|---|---|
| 70 | 1.16 | 1.15 | 1.14 | 1.15 |
| 80 | 1.13 | 1.12 | 1.11 | 1.11 |
| 90 | 1.11 | 1.09 | 1.08 | 1.09 |
| 100 | 1.10 | 1.08 | 1.07 | 1.08 |
| 120 | 1.07 | 1.06 | 1.05 | 1.05 |

Exemplary values for dose response per unit of air kerma for TLD1 are provided in the table hereinbelow, for planar photon waves of predetermined X-ray radiation qualities and angles of incidence with respect to the reference direction.

| Rad. Quality | 0° | 45° | 60° | 75° |
|---|---|---|---|---|
| N-30 | 0.370 | 0.364 | 0.366 | 0.389 |
| N-40 | 0.79 | 0.77 | 0.76 | 0.79 |
| N-60 | 1.09 | 1.07 | 1.05 | 1.07 |
| N-80 | 1.12 | 1.11 | 1.10 | 1.10 |
| N-100 | 1.08 | 1.07 | 1.05 | 1.06 |
| N-120 | 1.05 | 1.04 | 1.03 | 1.03 |
|  |  |  |  |  |
| W-60 | 1.03 | 1.02 | 0.99 | 1.01 |
| W-80 | 1.10 | 1.09 | 1.08 | 1.08 |
| W-110 | 1.09 | 1.07 | 1.06 | 1.07 |
| RQR2 | 0.49 | 0.48 | 0.48 | 0.50 |
| RQR4 | 0.70 | 0.70 | 0.69 | 0.71 |
| RQR6 | 0.84 | 0.82 | 0.81 | 0.84 |
| RQR7 | 0.89 | 0.87 | 0.86 | 0.88 |
| RQR8 | 0.93 | 0.91 | 0.90 | 0.92 |
| RQR9 | 0.97 | 0.97 | 0.95 | 0.96 |

Exemplary values for dose response per unit of air kerma for TLD2 are provided in the table hereinbelow, for monoenergetic planar photon waves of predetermined energies and angles of incidence with respect to the reference direction.

| Energy (keV) | 0° | 45° | 60° | 75° |
|---|---|---|---|---|
| 20 | 0.001 | 0.000 | 0.0005 | 0.000 |
| 30 | 0.010 | 0.014 | 0.0238 | 0.015 |
| 40 | 0.059 | 0.072 | 0.1080 | 0.129 |
| 50 | 0.19 | 0.14 | 0.21 | 0.25 |
| 60 | 0.40 | 0.33 | 0.33 | 0.38 |
| 70 | 0.84 | 0.65 | 0.58 | 0.58 |
| 80 | 1.09 | 0.85 | 0.69 | 0.63 |

(continued)

| Energy (keV) | 0° | 45° | 60° | 75° |
|---|---|---|---|---|
| 90 | 0.65 | 0.50 | 0.54 | 0.63 |
| 100 | 0.67 | 0.54 | 0.51 | 0.62 |
| 120 | 0.77 | 0.58 | 0.51 | 0.61 |

Exemplary values for dose response per unit of air kerma for TLD2 are provided in the table hereinbelow, for planar photon waves of predetermined X-ray radiation qualities and angles of incidence with respect to the reference direction.

| Rad. quality | 0° | 45° | 60° | 75° |
|---|---|---|---|---|
| N-30 | 0.002 | 0.003 | 0.005 | 0.002 |
| N-40 | 0.022 | 0.023 | 0.04 | 0.035 |
| N-60 | 0.136 | 0.121 | 0.16 | 0.201 |
| N-80 | 0.57 | 0.41 | 0.39 | 0.41 |
| N-100 | 0.85 | 0.69 | 0.58 | 0.61 |
| N-120 | 0.69 | 0.54 | 0.52 | 0.60 |
| | | | | |
| W-60 | 0.10 | 0.10 | 0.13 | 0.16 |
| W-80 | 0.33 | 0.27 | 0.26 | 0.30 |
| W-110 | 0.69 | 0.60 | 0.51 | 0.56 |
| | | | | |
| RQR2 | 0.008 | 0.008 | 0.014 | 0.010 |
| RQR4 | 0.035 | 0.035 | 0.051 | 0.057 |
| RQR6 | 0.11 | 0.09 | 0.11 | 0.12 |
| RQR7 | 0.16 | 0.14 | 0.15 | 0.17 |
| RQR8 | 0.22 | 0.17 | 0.18 | 0.20 |
| RQR9 | 0.30 | 0.24 | 0.23 | 0.25 |

The dose of the dosimeter ($D_{combined}$) is obtained from the combination of doses received by $TLD_1$ and $TLD_2$ using the following formula:

$$D_{combined} = \alpha \, (D_{TLD2} + \beta \, D_{TLD1})$$

Where $D_{combined}$ is the dose obtained with the dosimeter; $D_{TLD2}$ is the dose received by $TLD_2$; $D_{TLD1}$ is the dose received by $TLD_1$; and $\alpha$ and $\beta$ are constants whose values are chosen such that $D_{combined}$ is close to $E_{RP\text{-}garments}$ for as many photon energies and angles of incidence as possible.

For the present example, the values of $\alpha$ and $\beta$ are respectively 0.238 and 0.1, so the formula above becomes:

$$D_{combined} = 0.238*(D_{TLD2} + 0.1*D_{TLD1})$$

However, if another type of detectors is used, the design of suitable elements around the radiation sensitive elements would likely result in other appropriate values of $\alpha$ and $\beta$.

The energy and angular dependence of the dose obtained with the dosimeter ($D_{combined}$) as calculated with the equation hereinabove is shown in FIG. 31 for different standard radiation quality spectra and different angles of incidence. Given that the configurations of both detectors in the present example have a symmetrical geometry in the transverse and sagittal planes, as shown in FIG. 32, the energy and angular dependence is the same for positive and negative angles, e.g. $+\varphi=-\varphi$, in both planes, e.g. $\vartheta=\varphi$.

The ratio between the dose of the new dosimeter ($D_{combined}$) and the effective dose with RP lead garments ($E_{RP-gorments}$) shows the capability of the new dosimeter to measure the effective dose for specific conditions of exposure, e.g. photon beam energy or x-ray quality and angle of incidence. The closer the ratio is to one, the better is the estimation of the effective dose. If the ratio $D_{combined}/E_{RP-garments}$ is above one, the dosimeter overestimates the effective dose with RP garments. Instead if the ratio $D_{combined}/E_{RP-garments}$ is below one, the dose of the dosimeter is underestimating the effective dose.

This ratio is shown in FIG. 33 and FIG. 34 for photon beams with different x-ray qualities parallel to the transverse plane of the body with positive and negative angles of incidence, respectively; and in FIG. 35 and FIG. 36 for photon beams with different x-ray qualities parallel to the sagittal plane of the body with positive and negative angles of incidence, respectively.

It can be seen in FIG. 33 that for photon beams with x-ray qualities parallel to the transverse plane and coming from the right side of the body, the dose of the dosimeter underestimates the effective dose by -15% to -41% (ratio of $D_{combined}/E_{RP-garments}$ between 0.85 and 0.59) for the N- series, by -23% to -40% (ratio between 0.77 and 0.60) for the W- series and by -15% to -37% (ratio between 0.85 and 0.63) for the RQR series. A similar performance is observed for photon beams coming from the left side of the body (FIG. 34), but percentages of under estimation reach -49% for the N- series, -48% for the W- series and -46% for the RQR series.

For photon beams with x-ray qualities parallel to the sagittal plane and coming from above (FIG. 35), the percentages of under- and overestimation of the effective dose are: -37% and +9% (ratio between 0.63 and 1.09) for the N- series, -38% and +5% (ratio between 0.62 and 1.05) for the W- series and -29% and +5% (ratio between 0.71 and 1.05) for the RQR series.

For photon beams parallel to the sagittal plane and coming from below (FIG. 36), the percentages of under- and overestimation of the effective dose are: -37% and +48% (ratio between 0.63 and 1.48) for the N- series, -38% and +46% (ratio between 0.62 and 1.46) for the W- series and - 29% and +44% (ratio between 0.71 and 1.44) for the RQR series.

The overall performance of the dosimeter is that it can estimate the effective dose with an overestimation below or equal to +48% and an underestimation below or equal to -49% for all the radiation fields included here, which are representative of medical staff working in IR and IC.

In a further example, another exemplary dosimeter in accordance with embodiments of the present invention may correspond to a similar design as discussed in previous example, where reference was made to FIG. 29 and FIG. 30, yet differing in that the two radiation sensitive elements are Al2O3:C OSL detector elements instead of TLDs, e.g. only differing in the detector element selection and physical dimensions of these detector elements. These OSL detectors have a thickness of 0.2 mm, which corresponds to a commercially available format. FIG. 38 shows a ratio between an effective dose $D_{combined}$ estimate obtainable by this exemplary dosimeter and the benchmark effective dose $E_{RP\ garments}$ of an adult human wearing radioprotective lead garments, e.g. as represented by a simulated anthropomorphic phantom, for photon beams with different x-ray qualities and different angles of incidence. It will be observed that this exemplary dosimeter provides a ratio of the dose estimated by the dosimeter and the effective dose that is similar to that obtained with the TLD-based dosimeter in previous example, e.g. the estimated effective dose is within +/- 50% of the benchmark effective dose.

In this example, although a similar design was applied as in previous example, appropriate values, e.g. optimized values, of constants $\alpha$ and $\beta$ for a linear combination of both detector values were used in order to obtain the minimum possible over- and underestimation of the effective dose.

## Claims

1. A personal radiation dosimetry system (20) comprising a personal radiation dosimeter (1) for estimating an effective dose of an adult human wearing a radioprotective garment, the personal radiation dosimeter comprising:

   - a structural support element (2) adapted for attaching to an exterior surface of said radioprotective garment while worn, such that a back surface (7) of the structural support element (2) is configured to face toward the body of said adult human and a front surface (3) of the structural support element (2) is configured to face away from said body, and
   - at least two ionizing radiation detectors (5,6) housed in or attached onto said structural support element (2), each ionizing radiation detector having a different dose response as a function of a photon energy and an angle of incidence of radiation with respect to a reference direction (4) from said front surface to said back surface, the personal radiation dosimetry system being **characterized in** comprising a processing device (22) configured for estimating an effective dose registered by said personal radiation dosimeter by calculating a predetermined linear combination of dose values collected by each of the at least two ionizing radiation detectors,

wherein said predetermined linear combination of the dose responses of said at least two ionizing radiation detectors corresponds to an estimate in the range of 40% to 160% of the effective dose received by said adult human under each of a plurality of reference exposure conditions, the effective dose for each of the plurality of reference exposure conditions being determined experimentally or by simulations,

wherein said plurality of reference exposure conditions comprises at least an exposure to a planar photon wave propagating in said reference direction (4), an exposure to a planar photon wave propagating along a direction at an angle of 45° with said reference direction and an exposure to a planar photon wave propagating along a direction at an angle of 60° with said reference direction, and wherein each of said planar photon waves has an energy distribution corresponding to one of the following:

an X-ray radiation quality obtainable by a peak X-ray tube voltage of 80 kV and filtered by 0.50 mm Cu and 4.00 mm Al, said X-ray radiation quality corresponding to the wide X-ray spectrum W-80 as defined by the ISO 4037-1 standard,

an X-ray radiation quality obtainable by a peak X-ray tube voltage of 60 kV and filtered by 0.60 mm Cu and 4.00 mm Al, said X-ray radiation quality corresponding to the narrow X-ray spectrum N-60 as defined by the ISO 4037-1 standard, and

an X-ray radiation quality obtainable by a peak X-ray tube voltage of 60 kV and filtered by 0.30 mm Cu and 4.00 mm Al, said X-ray radiation quality corresponding to the wide X-ray spectrum W-60 as defined by the ISO 4037-1 standard.

2. The personal radiation dosimetry system according to claim 1, wherein said radioprotective garment comprises a radioprotective apron and a radioprotective thyroid shield.

3. The personal radiation dosimetry system according to any of the previous claims, wherein the dose response of a first ionizing radiation detector (5) of the at least two ionizing radiation detectors is at least five times higher than the dose response of a second ionizing radiation detector (6) of the at least two ionizing radiation detectors for incident photon radiation having photon energies in the range of 20 keV to 30 keV,

wherein the dose response of the first ionizing radiation detector (5) is less than three times higher than the dose response of the second ionizing radiation detector (6) for incident photon radiation having photon energies in the range of 75 keV to 85 keV,

wherein the dose response per unit of air kerma of said first ionizing radiation detector (5) is substantially independent of said angle of incidence with respect to said reference direction over a range of said angle from 0° to at least 60°,

wherein the dose response per unit of air kerma of said second ionizing radiation detector (6) for incident photon radiation of 80 keV propagating along said reference direction is greater than or equal to 2.0 times the response per unit of air kerma of said second ionizing radiation detector (6) for incident photon radiation of 60 keV propagating along said reference direction, and

wherein the dose response per unit of air kerma of said second ionizing radiation detector (6) for incident photon radiation of 80 keV propagating along said reference direction is greater than or equal to 1.4 times the dose response per unit of air kerma of said second ionizing radiation detector for incident photon radiation of 100 keV propagating along said reference direction.

4. The personal radiation dosimetry system according to claim 3, wherein the dose response per unit of air kerma of said second ionizing radiation detector (6) for incident photon radiation of 80 keV propagating in a direction at an angle of 60° with respect to said reference direction is less than 1.5 times the dose response per unit of air kerma of said second ionizing radiation detector for incident photon radiation of 100 keV propagating in said direction at said angle of 60° with respect to the reference direction.

5. The personal radiation dosimetry system according to any of the previous claims, wherein each ionizing radiation detector (5,6) comprises a radiation sensitive element and a radiation filter for filtering radiation incident on the radiation sensitive element in a manner dependent on said photonic energy and/or on said angle of incidence, said radiation sensitive element and/or said radiation filter differing for each ionizing radiation detector such as to obtain said different dose responses thereof.

6. The personal radiation dosimetry system according to claim 5, wherein said radiation sensitive element comprises a thermoluminescent detector, an optically stimulated luminescence detector, a radio-photoluminescent detector, a diode detector and/or a Direct Ion Storage (DIS) detector.

7. The personal radiation dosimetry system according to claim 5 or claim 6, wherein said filter of a first ionizing radiation detector (5) of the at least two ionizing radiation detectors is adapted for attenuating photon radiation having photon energies in the range of 20 keV to 40 keV by a transmittance factor in the range of 0.20 to 0. 60.

8. The personal radiation dosimetry system according to any of claims 5 to 7, wherein said filter of a second ionizing radiation detector (6) of the at least two ionizing radiation detectors is adapted for attenuating photon radiation propagating along said reference direction (4) such as to obtain a transmittance of said photon radiation as function of photon energy that is substantially proportional to the transmittance of photon radiation as function of photon energy through said radioprotective garment, wherein said filter of the second ionizing radiation detector is adapted for attenuating photon radiation propagating along said reference direction (4) and having energies in the range of 50 keV to 60 keV by a transmittance factor in the range of 0.02 to 0.25.

9. The personal radiation dosimetry system according to claim 8, wherein said filter of the second ionizing radiation detector comprises a first filtering element for attenuating photon radiation propagating along said reference direction (4) before impinging on said radiation sensitive element, and a second filtering element for attenuating photon radiation propagating along a direction at an angle with said reference direction (4), said angle being in the range of 45° to 80°.

10. The personal radiation dosimetry system according to any of the previous claims, said structural support element (2) comprising a backscatter filter supported by said back surface or forming at least part of said back surface (7), said backscatter filter being adapted for attenuating radiation that is backscattered toward the at least two ionizing radiation detectors by said radioprotective garment when the structural support element (2) is attached to said exterior surface of said radioprotective garment.

11. The personal radiation dosimetry system according to any of the previous claims, further comprising:
a reader (21) for reading out said personal radiation dosimeter, said reader being adapted for determining values representative of the dose collected by each of said at least two ionizing radiation detectors.

12. The personal radiation dosimetry system according to any of the previous claims , wherein the processing device is programmed for calculating the predetermined linear combination of the values to obtain an effective dose estimate, wherein the effective dose estimate has a dose response per unit of air kerma to a planar photon wave having an energy distribution corresponding to N-100 and that impinged on the dosimeter propagating along the reference direction, that is greater than or equal to 1.2 times the dose response per unit of air kerma to a planar photon wave having an energy distribution corresponding to N-80.

13. The personal radiation dosimetry system according to any of the previous claims , wherein the processing device is programmed for calculating the predetermined linear combination of the values to obtain an effective dose estimate, wherein the effective dose estimate has a dose response per unit of air kerma to a planar photon wave having an energy distribution corresponding to N-100, and that impinged on the dosimeter propagating along the reference direction, that is greater than or equal to 1.1 times the dose response per unit of air kerma to a planar photon wave having an energy distribution corresponding to N-120, and that impinged on the dosimeter propagating along the reference direction.

14. A personal radiation dosimetry method for estimating an effective dose of an adult human wearing a radioprotective garment, the method comprising,

- positioning at least two ionizing radiation detectors on an exterior surface of the radioprotective garment while worn, the at least two ionizing radiation detectors having a different dose responses as a function of a photon energy and an angle of incidence of radiation with respect to a reference direction being directed toward the body of adult human,

the method further comprising

- detecting ionizing radiation by these ionizing radiation detectors and determining values representative of the dose collected by each of the at least two ionizing radiation detectors, and **characterized in**

- estimating with a processing device an effective dose received by the adult human by calculating a predetermined linear combination of said values representative of the dose, the predetermined linear combination of the dose responses of the at least two ionizing radiation detectors corresponding to an estimate in the range of 40% to 160% of the effective dose received by the adult human under each of a plurality of reference exposure conditions, the effective dose for each of the plurality of reference exposure conditions being determined experimentally or by simulations

wherein said plurality of reference exposure conditions comprises at least an exposure to a planar photon wave propagating in the reference direction, an exposure to a planar photon wave propagating along a direction at an angle of 45° with the reference direction and an exposure to a substantially planar photon wave propagating along a direction at an angle of 60° with the reference direction, and wherein each of these planar photon waves has an energy distribution corresponding to one of the following :

an X-ray radiation quality obtainable by a peak X-ray tube voltage of 80 kV and filtered by 0.50 mm Cu and 4.00 mm Al, this X-ray radiation quality corresponding to the wide X-ray spectrum W-80 as defined by the ISO 4037-1 standard,
an X-ray radiation quality obtainable by a peak X-ray tube voltage of 60 kV and filtered by 0.60 mm Cu and 4.00 mm Al, this X-ray radiation quality corresponding to the narrow X-ray spectrum N-60 as defined by the ISO 4037-1 standard, and
an X-ray radiation quality obtainable by a peak X-ray tube voltage of 60 kV and filtered by 0.30 mm Cu and 4.00 mm Al, this X-ray radiation quality corresponding to the wide X-ray spectrum W -60 as defined by the ISO 4037-1 standard.

15. The method according to claim 14, wherein calculating the predetermined linear combination of the values comprises calculating an effective dose estimate having a dose response per unit of air kerma to a planar photon wave having an energy distribution corresponding to N-100 and that impinged on the detectors propagating along the reference direction, that is greater than or equal to 1.1 times the dose response per unit of air kerma to a planar photon wave having an energy distribution corresponding to N-120 and that impinged on the detectors propagating along the reference direction.

**Patentansprüche**

1. Persönliches Strahlendosimetersystem (20), umfassend ein persönliches Strahlendosimeter (1) zum Schätzen einer effektiven Dosis eines erwachsenen Menschen, der ein strahlenschützendes Kleidungsstück trägt, wobei das persönliche Strahlendosimeter umfasst:

- ein strukturelles Stützelement (2), das angepasst ist, um beim Tragen an einer Außenseite des strahlenschützenden Kleidungsstücks befestigt zu werden, sodass eine Rückseite (7) des strukturellen Stützelements (2) dazu konfiguriert ist, dem Körper des erwachsenen Menschen zugewandt zu sein und eine Vorderseite (3) des strukturellen Stützelements (2) dazu konfiguriert ist, vom Körper abgewandt zu sein, und
- mindestens zwei Detektoren für ionisierende Strahlung (5, 6), die im strukturellen Stützelement (2) aufgenommen oder daran befestigt sind, wobei jeder Detektor für ionisierende Strahlung eine unterschiedliche Dosisempfindlichkeit als eine Funktion einer Photonenenergie und eines Strahleneinfallswinkels in Bezug auf eine Referenzrichtung (4) von der Vorderseite zur Rückseite aufweist,

wobei das persönliche Strahlendosimetersystem **dadurch gekennzeichnet ist, dass** es eine Verarbeitungsvorrichtung (22) umfasst, die dazu konfiguriert ist, eine effektive Dosis zu schätzen, die vom persönlichen Strahlendosimetersystem registriert wird, indem eine vorbestimmte lineare Kombination von Dosiswerten, die von jedem der mindestens zwei Detektoren für ionisierende Strahlung gesammelt werden, berechnet wird, wobei die vorbestimmte lineare Kombination der Dosisempfindlichkeiten der mindestens zwei Detektoren für ionisierende Strahlung einer Schätzung im Bereich von 40 % bis 160 % der effektiven Dosis entspricht, die vom erwachsenen Menschen unter jeder von einer Vielzahl von Referenzexpositionsbedingungen erhalten wird, wobei die effektive Dosis für jede der Vielzahl von Referenzexpositionsbedingungen experimentell oder durch Simulationen bestimmt wird, wobei die Vielzahl von Referenzexpositionsbedingungen mindestens eine Exposition gegenüber einer planaren Photonenwelle umfasst, die sich in der Referenzrichtung (4) ausbreitet, eine Exposition gegenüber einer planaren Photonenwelle, die sich entlang einer Richtung in einem Winkel von 45° zur Referenzrichtung ausbreitet, und eine Exposition gegenüber einer planaren Photonenwelle, die sich entlang einer Richtung in einem Winkel von 60° zur Referenzrichtung ausbreitet, und wobei jede der planaren Photonenwellen eine Energieverteilung aufweist, die einem der folgenden entspricht:

eine Röntgenstrahlenqualität, die durch eine Röntgenstrahlen-Spitzenröhrenspannung von 80 kV erhältlich ist und durch 0,50 mm Cu und 4,00 mm Al gefiltert wird, wobei die Röntgenstrahlenqualität dem breiten Röntgenstrahlenspektrum W-80, wie im ISO-Standard 4037-1 definiert, entspricht,
eine Röntgenstrahlenqualität, die durch eine Röntgenstrahlen-Spitzenröhrenspannung von 60 kV erhältlich ist und durch 0,60 mm Cu und 4,00 mm Al gefiltert wird, wobei die Röntgenstrahlenqualität dem engen Röntgenstrahlenspektrum N-60, wie im ISO-Standard 4037-1 definiert, entspricht,
eine Röntgenstrahlenqualität, die durch eine Röntgenstrahlen-Spitzenröhrenspannung von 60 kV erhältlich ist und durch 0,30 mm Cu und 4,00 mm Al gefiltert wird, wobei die Röntgenstrahlenqualität dem breiten Röntgenstrahlenspektrum W-60, wie im ISO-Standard 4037-1 definiert, entspricht.

2. Persönliches Strahlendosimetersystem nach Anspruch 1, wobei das strahlenschützende Kleidungsstück einen strahlenschützenden Schurz und eine strahlenschützende Schilddrüsen-Abschirmung umfasst.

3. Persönliches Strahlendosimetersystem nach einem der vorstehenden Ansprüche, wobei die Dosisempfindlichkeit eines ersten Detektors für ionisierende Strahlung (5) der mindestens zwei Detektoren für ionisierende Strahlung mindestens das Fünffache der Dosisempfindlichkeit eines zweiten Detektors für ionisierende Strahlung (6) der mindestens zwei Detektoren für ionisierende Strahlung für einfallende Photonenstrahlung ist, die Photonenenergien im Bereich von 20 keV bis 30 keV aufweist,
wobei die Dosisempfindlichkeit des ersten Detektors für ionisierende Strahlung (5) weniger als das Dreifache der Dosisempfindlichkeit des zweiten Detektors für ionisierende Strahlung (6) für einfallende Photonenstrahlung ist, die Photonenenergien im Bereich von 75 keV bis 85 keV aufweist,
wobei die Dosisempfindlichkeit pro Luftkerma-Einheit des ersten Detektors für ionisierende Strahlung (5) im Wesentlichen unabhängig vom Einfallswinkel in Bezug auf die Referenzrichtung über einen Bereich des Winkels von 0° bis mindestens 60° ist,
wobei die Dosisempfindlichkeit pro Luftkerma-Einheit des zweiten Detektors für ionisierende Strahlung (6) für einfallende Photonenstrahlung von 80 keV, die sich entlang der Referenzrichtung ausbreitet, größer als oder gleich dem 2,0-Fachen der Dosisempfindlichkeit pro Luftkerma-Einheit des zweiten Detektors für ionisierende Strahlung (6) für einfallende Photonenstrahlung von 60 keV ist, die sich entlang der Referenzrichtung ausbreitet, und
wobei die Dosisempfindlichkeit pro Luftkerma-Einheit des zweiten Detektors für ionisierende Strahlung (6) für einfallende Photonenstrahlung von 80 keV, die sich entlang der Referenzrichtung ausbreitet, größer als oder gleich dem 1,4-Fachen der Dosisempfindlichkeit pro Luftkerma-Einheit des zweiten Detektors für ionisierende Strahlung für einfallende Photonenstrahlung von 100 keV ist, die sich entlang der Referenzrichtung ausbreitet.

4. Persönliches Strahlendosimetersystem nach Anspruch 3, wobei die Dosisempfindlichkeit pro Luftkerma-Einheit des zweiten Detektors für ionisierende Strahlung (6) für einfallende Photonenstrahlung von 80 keV, die sich in einer Richtung in einem Winkel von 60° in Bezug auf die Referenzrichtung ausbreitet, weniger als das 1,5-Fache der Dosisempfindlichkeit pro Luftkerma-Einheit des zweiten Detektors für ionisierende Strahlung für einfallende Photonenstrahlung von 100 keV ist, die sich in der Richtung im Winkel von 60° in Bezug auf die Referenzrichtung ausbreitet.

5. Persönliches Strahlendosimetersystem nach einem der vorstehenden Ansprüche, wobei jeder Detektor für ionisierende Strahlung (5,6) ein strahlungssensitives Element und einen Strahlungsfilter umfasst, um Strahlung, die auf das strahlungssensitive Element einfällt, in einer Weise zu filtern, die von der Photonenenergie und/oder vom Einfallswinkel abhängt, wobei das strahlungssensitive Element und/oder der Strahlungsfilter sich für jeden Detektor für ionisierende Strahlung unterscheidet, sodass unterschiedliche Dosisempfindlichkeiten davon erhalten werden.

6. Persönliches Strahlendosimetersystem nach Anspruch 5, wobei das strahlungssensitive Element einen Thermolumineszenz-Detektor, einen optisch stimulierten Lumineszenz-Detektor, einen Strahlenphotolumineszenz-Detektor, einen Diodendetektor und/oder einen Detektor mit direkter Ionenspeicherung (DIS) umfasst.

7. Persönliches Strahlendosimetersystem nach Anspruch 5 oder Anspruch 6, wobei der Filter eines ersten Detektors für ionisierende Strahlung (5) der mindestens zwei Detektoren für ionisierende Strahlung angepasst ist, um Photonenstrahlung, die Photonenenergien im Bereich von 20 keV bis 40 keV aufweist, um einen Transmissionsfaktor im Bereich von 0,20 bis 0,60 abzuschwächen.

8. Persönliches Strahlendosimetersystem nach einem der Ansprüche 5 bis 7, wobei der Filter eines zweiten Detektors für ionisierende Strahlung (6) der mindestens zwei Detektoren für ionisierende Strahlung angepasst ist, um Photonenstrahlung, die sich entlang der Referenzrichtung (4) ausbreitet, abzuschwächen, sodass eine Transmission der Photonenstrahlung als Funktion von Photonenenergien erhalten wird, die im Wesentlichen proportional zur Transmission von Photonenstrahlung als Funktion von Photonenenergie durch das strahlenschützende Kleidungsstück ist, wobei der Filter des zweiten Detektors für ionisierende Strahlung angepasst ist, um Photonenstrahlung, die sich entlang der Referenzrichtung (4) ausbreitet und Energien im Bereich von 50 keV bis 60 keV aufweist, um einen Transmissionsfaktor im Bereich von 0,02 bis 0,25 abzuschwächen.

9. Persönliches Strahlendosimetersystem nach Anspruch 8, wobei der Filter des zweiten Detektors für ionisierende Strahlung ein erstes Filterelement zum Abschwächen von Photonenstrahlung umfasst, die sich entlang der Referenzrichtung (4) ausbreitet, vor Auftreffen auf dem strahlungssensitiven Element, und ein zweites Filterelement zum Abschwächen von Photonenstrahlung, die sich entlang einer Richtung in einem Winkel zur Referenzrichtung (4) ausbreitet, wobei der Winkel im Bereich von 45 ° bis 80 ° ist.

10. Persönliches Strahlendosimetersystem nach einem der vorstehenden Ansprüche, wobei das strukturelle Stützelement (2) einen Rückstreuungsfilter umfasst, der von der Rückseite gestützt wird oder mindestens Teil der Rückseite (7) bildet, wobei der Rückstreuungsfilter angepasst ist, um Strahlung abzuschwächen, die vom strahlenschützenden Kleidungsstück zu den mindestens zwei Detektoren für ionisierende Strahlung rückgestreut wird, wenn das strukturelle Stützelement (2) an der Außenseite des strahlenschützenden Kleidungsstücks befestigt wird.

11. Persönliches Strahlendosimetersystem nach einem der vorstehenden Ansprüche, weiter umfassend:
einen Leser (21) zum Auslesen des persönlichen Strahlendosimeters, wobei der Leser angepasst ist, um Werte zu bestimmen, die repräsentativ sind für die Dosis, die von jedem der mindestens zwei Detektoren für ionisierende Strahlung gesammelt wird.

12. Persönliches Strahlendosimetersystem nach einem der vorstehenden Ansprüche, wobei die Verarbeitungsvorrichtung programmiert ist, um die vorbestimmte lineare Kombination der Werte zu berechnen, um eine effektive Dosisschätzung zu erhalten, wobei die effektive Dosisschätzung eine Dosisempfindlichkeit pro Luftkerma-Einheit gegenüber einer planaren Photonenwelle, die eine Energieverteilung entsprechend N-100 aufweist und die auf das Dosimeter auftrifft, sich entlang der Referenzrichtung ausbreitend, aufweist, die größer als oder gleich dem 1,2-Fachen der Dosisempfindlichkeit pro Luftkerma-Einheit gegenüber einer planaren Photonenwelle ist, die eine Energieverteilung aufweist, die N-80 entspricht.

13. Persönliches Strahlendosimetersystem nach einem der vorstehenden Ansprüche, wobei die Verarbeitungsvorrichtung programmiert ist, um die vorbestimmte lineare Kombination der Werte zu berechnen, um eine effektive Dosisschätzung zu erhalten, wobei die effektive Dosisschätzung eine Dosisempfindlichkeit pro Luftkerma-Einheit gegenüber einer planaren Photonenwelle, die eine Energieverteilung entsprechend N-100 aufweist und die auf das Dosimeter auftrifft, sich entlang der Referenzrichtung ausbreitend, aufweist, die größer als oder gleich dem 1,1-Fachen der Dosisempfindlichkeit pro Luftkerma-Einheit gegenüber einer planaren Photonenwelle ist, die eine Energieverteilung entsprechend N-120 aufweist und die auf das Dosimeter auftrifft, sich entlang der Referenzrichtung ausbreitend.

14. Persönliches Strahlendosimeterverfahren zum Schätzen einer effektiven Dosis eines erwachsenen Menschen, der ein strahlenschützendes Kleidungsstück trägt, wobei das Verfahren umfasst

- Positionieren von mindestens zwei Detektoren für ionisierende Strahlung an einer Außenseite des strahlenschützenden Kleidungsstücks beim Tragen, wobei die mindestens zwei Detektoren für ionisierende Strahlung eine unterschiedliche Dosisempfindlichkeit als eine Funktion einer Photonenenergie und eines Strahleneinfallswinkels in Bezug auf eine Referenzrichtung aufweisen, die zum Körper eines erwachsenen Menschen gerichtet ist,

wobei das Verfahren weiter umfasst

- Detektieren von ionisierender Strahlung durch diese Detektoren für ionisierende Strahlung und Bestimmen von Werten, die repräsentativ sind für die Dosis, die von jedem der mindestens zwei Detektoren für ionisierende Strahlung gesammelt wird, und **gekennzeichnet durch**
- Schätzen, mit einer Verarbeitungsvorrichtung, einer effektiven Dosis, die vom erwachsenen Menschen erhalten wird, durch Berechnen einer vorbestimmten linearen Kombination der Werte, die repräsentativ sind für die Dosis, wobei die vorbestimmte lineare Kombination der Dosisempfindlichkeiten der mindestens zwei Detektoren für ionisierende Strahlung einer Schätzung im Bereich von 40 % bis 160 % der effektiven Dosis entsprechen, die vom erwachsenen Menschen unter jeder von einer Vielzahl von Referenzexpositionsbedingungen erhalten wird, wobei die effektive Dosis für jede der Vielzahl von Referenzexpositionsbedingungen experimentell oder durch Simulationen bestimmt wird,

wobei die Vielzahl von Referenzexpositionsbedingungen mindestens eine Exposition gegenüber einer planaren Photonenwelle umfasst, die sich in der Referenzrichtung ausbreitet, eine Exposition gegenüber einer planaren Photonenwelle, die sich entlang einer Richtung in einem Winkel von 45 ° zur Referenzrichtung ausbreitet, und eine Exposition gegenüber einer im Wesentlichen planaren Photonenwelle, die sich entlang einer Richtung in einem Winkel von 60 ° zur Referenzrichtung ausbreitet, und wobei jede dieser planaren Photonenwellen eine Energieverteilung aufweist, die einem der folgenden entspricht:

eine Röntgenstrahlenqualität, die durch eine Röntgenstrahlen-Spitzenröhrenspannung von 80 kV erhältlich ist und durch 0,50 mm Cu und 4,00 mm Al gefiltert wird, wobei diese Röntgenstrahlenqualität dem breiten Röntgenstrahlenspektrum W-80, wie im ISO-Standard 4037-1 definiert, entspricht, eine Röntgenstrahlenqualität, die durch eine Röntgenstrahlen-Spitzenröhrenspannung von 60 kV erhältlich ist und durch 0,60 mm Cu und 4,00 mm Al gefiltert wird, wobei diese Röntgenstrahlenqualität dem engen Röntgenstrahlenspektrum N-60, wie im ISO-Standard 4037-1 definiert, entspricht, eine Röntgenstrahlenqualität, die durch eine Röntgenstrahlen-Spitzenröhrenspannung von 60 kV erhältlich ist und durch 0,30 mm Cu und 4,00 mm Al gefiltert wird, wobei diese Röntgenstrahlenqualität dem breiten Röntgenstrahlenspektrum W-60, wie im ISO-Standard 4037-1 definiert, entspricht.

**15.** Verfahren nach Anspruch 14, wobei Berechnen der vorbestimmten linearen Kombination der Werte Berechnen einer effektiven Dosisschätzung umfasst, die eine Dosisempfindlichkeit pro Luftkerma-Einheit gegenüber einer planaren Photonenwelle, die eine Energieverteilung entsprechend N-100 aufweist und die auf die Detektoren auftrifft, sich entlang der Referenzrichtung ausbreitend, aufweist, die größer als oder gleich dem 1,1-Fachen der Dosisempfindlichkeit pro Luftkerma-Einheit gegenüber einer planaren Photonenwelle ist, die eine Energieverteilung entsprechend N-120 aufweist und die auf die Detektoren auftrifft, sich entlang der Referenzrichtung ausbreiten.

## Revendications

**1.** Système de dosimétrie individuelle de rayonnement (20) comprenant un dosimètre individuel de rayonnement (1) pour estimer une dose efficace d'un humain adulte portant un vêtement radioprotecteur, le dosimètre individuel de rayonnement comprenant :

- un élément de support structurel (2) adapté pour s'attacher à une surface extérieure dudit vêtement radioprotecteur tandis qu'il est porté, de sorte qu'une surface arrière (7) de l'élément de support structurel (2) est configurée pour être orientée vers le corps dudit humain adulte et qu'une surface avant (3) de l'élément de support structurel (2) est configurée pour être orientée à l'opposé dudit corps, et
- au moins deux détecteurs de rayonnement ionisant (5, 6) logés dans ou attachés sur ledit élément de support structurel (2), chaque détecteur de rayonnement ionisant ayant un effet-dose différent en fonction d'une énergie de photon et d'un angle d'incidence de rayonnement par rapport à une direction de référence (4) de ladite surface avant à ladite surface arrière,

le système de dosimétrie individuelle de rayonnement étant **caractérisé en ce qu'**il comprend un dispositif de traitement (22) configuré pour estimer une dose efficace enregistrée par ledit dosimètre individuel de rayonnement en calculant une combinaison linéaire prédéterminée de valeurs de dose collectées par chacun des au moins deux détecteurs de rayonnement ionisant, dans lequel ladite combinaison linéaire prédéterminée des effet-doses desdits au moins deux détecteurs de rayonnement ionisant correspond à une estimation dans la plage de 40 % à 160 % de la dose efficace reçue par ledit humain adulte dans chacune d'une pluralité de conditions d'exposition de référence, la dose efficace pour chacune de la pluralité de conditions d'exposition de référence étant déterminée expérimentalement ou par des simulations, dans lequel ladite pluralité de conditions d'exposition de référence comprend au moins une exposition à une onde de photon plane se propageant dans ladite direction de référence (4), une exposition à une onde de photon plane se propageant suivant une direction à un angle de 45° par rapport à ladite direction de référence et une exposition à une onde de photon plane se propageant suivant une direction à un angle de 60° par rapport à ladite direction de référence, et dans lequel chacune desdites ondes de photon planes présente une distribution d'énergie correspondant à l'une de ce qui suit :

une qualité de rayonnement de rayons X pouvant être obtenue par une tension de crête de tube à rayons X de 80 kV et filtrée par 0,50 mm de Cu et 4,00 mm d'Al, ladite qualité de rayonnement de rayons X correspondant au spectre large de rayons X W-80 tel que défini par la norme ISO 4037-1,
une qualité de rayonnement de rayons X pouvant être obtenue par une tension de crête de tube à rayons X de 60 kV et filtrée par 0,60 mm de Cu et 4,00 mm d'Al, ladite qualité de rayonnement de rayons X correspondant au spectre étroit de rayons X N-60 tel que défini par la norme ISO 4037-1, et
une qualité de rayonnement de rayons X pouvant être obtenue par une tension de crête de tube à rayons X de 60 kV et filtrée par 0,30 mm de Cu et 4,00 mm d'Al, ladite qualité de rayonnement de rayons X correspondant au spectre large de rayons X W-60 tel que défini par la norme ISO 4037-1.

2. Système de dosimétrie individuelle de rayonnement selon la revendication 1, dans lequel ledit vêtement radioprotecteur comprend un tablier radioprotecteur et un cache-thyroïde radioprotecteur.

3. Système de dosimétrie individuelle de rayonnement selon l'une quelconque des revendications précédentes, dans lequel l'effet-dose d'un premier détecteur de rayonnement ionisant (5) des au moins deux détecteurs de rayonnement ionisant est au moins cinq fois plus élevé que l'effet-dose d'un second détecteur de rayonnement ionisant (6) des au moins deux détecteurs de rayonnement ionisant pour un rayonnement de photon incident ayant des énergies de photon dans la plage de 20 keV à 30 keV,
dans lequel l'effet-dose du premier détecteur de rayonnement ionisant (5) est moins de trois fois plus élevé que l'effet-dose du second détecteur de rayonnement ionisant (6) pour un rayonnement de photon incident ayant des énergies de photon dans la plage de 75 keV à 85 keV,
dans lequel l'effet-dose par unité de kerma de l'air dudit premier détecteur de rayonnement ionisant (5) est sensiblement indépendant dudit angle d'incidence par rapport à ladite direction de référence sur une plage dudit angle de 0° à au moins 60°,
dans lequel l'effet-dose par unité de kerma de l'air dudit second détecteur de rayonnement ionisant (6) pour un rayonnement de photon incident de 80 keV se propageant suivant ladite direction de référence est supérieur ou égal à 2,0 fois l'effet-dose par unité de kerma de l'air dudit second détecteur de rayonnement ionisant (6) pour un rayonnement de photon incident de 60 keV se propageant suivant ladite direction de référence, et
dans lequel l'effet-dose par unité de kerma de l'air dudit second détecteur de rayonnement ionisant (6) pour un rayonnement de photon incident de 80 keV se propageant suivant ladite direction de référence est supérieur ou égal à 1,4 fois l'effet-dose par unité de kerma de l'air dudit second détecteur de rayonnement ionisant pour un rayonnement de photon incident de 100 keV se propageant suivant ladite direction de référence.

4. Système de dosimétrie individuelle de rayonnement selon la revendication 3, dans lequel l'effet-dose par unité de kerma de l'air dudit second détecteur de rayonnement ionisant (6) pour un rayonnement de photon incident de 80 keV se propageant dans une direction à un angle de 60° par rapport à ladite direction de référence est inférieur à 1,5 fois l'effet-dose par unité de kerma de l'air dudit second détecteur de rayonnement ionisant pour un rayonnement de photon incident de 100 keV se propageant dans ladite direction audit angle de 60° par rapport à la direction de référence.

5. Système de dosimétrie individuelle de rayonnement selon l'une quelconque des revendications précédentes, dans lequel chaque détecteur de rayonnement ionisant (5, 6) comprend un élément sensible au rayonnement et un filtre à rayonnement pour filtrer un rayonnement incident sur l'élément sensible au rayonnement d'une manière dépendant de ladite énergie photonique et/ou dudit angle d'incidence, ledit élément sensible au rayonnement et/ou ledit filtre à rayonnement différant pour chaque détecteur de rayonnement ionisant de façon à obtenir lesdits effet-doses différents de celui-ci.

6. Système de dosimétrie individuelle de rayonnement selon la revendication 5, dans lequel ledit élément sensible au rayonnement comprend un détecteur thermoluminescent, un détecteur de luminescence stimulée optiquement, un détecteur radio-photoluminescent, un détecteur à diode et/ou un détecteur de stockage direct d'ions (DIS).

7. Système de dosimétrie individuelle de rayonnement selon la revendication 5 ou la revendication 6, dans lequel ledit filtre d'un premier détecteur de rayonnement ionisant (5) des au moins deux détecteurs de rayonnement ionisant est adapté pour atténuer un rayonnement de photon ayant des énergies de photon dans la plage de 20 keV à 40 keV par un facteur de transmittance dans la plage de 0,20 à 0,60.

8. Système de dosimétrie individuelle de rayonnement selon l'une quelconque des revendications 5 à 7, dans lequel ledit filtre d'un second détecteur de rayonnement ionisant (6) des au moins deux détecteurs de rayonnement ionisant est adapté pour atténuer un rayonnement de photon se propageant suivant ladite direction de référence (4) de façon à obtenir une transmittance dudit rayonnement de photon en fonction d'une énergie de photon qui est sensiblement proportionnelle à la transmittance de rayonnement de photon en fonction d'une énergie de photon à travers ledit vêtement radioprotecteur, dans lequel ledit filtre du second détecteur de rayonnement ionisant est adapté pour atténuer un rayonnement de photon se propageant suivant ladite direction de référence (4) et ayant des énergies dans la plage de 50 keV à 60 keV par un facteur de transmittance dans la plage de 0,02 à 0,25.

9. Système de dosimétrie individuelle de rayonnement selon la revendication 8, dans lequel ledit filtre du second détecteur de rayonnement ionisant comprend un premier élément de filtrage pour atténuer un rayonnement de photon se propageant suivant ladite direction de référence (4) avant qu'il arrive sur ledit élément sensible au rayonnement, et un second élément de filtrage pour atténuer un rayonnement de photon se propageant suivant une direction à un angle par rapport à ladite direction de référence (4), ledit angle étant dans la plage de 45° à 80°.

10. Système de dosimétrie individuelle de rayonnement selon l'une quelconque des revendications précédentes, ledit élément de support structurel (2) comprenant un filtre de rétrodiffusion supporté par ladite surface arrière ou faisant au moins partie de ladite surface arrière (7), ledit filtre de rétrodiffusion étant adapté pour atténuer un rayonnement qui est rétrodiffusé vers les au moins deux détecteurs de rayonnement ionisant par ledit vêtement radioprotecteur lorsque l'élément de support structurel (2) est attaché à ladite surface extérieure dudit vêtement radioprotecteur.

11. Système de dosimétrie individuelle de rayonnement selon l'une quelconque des revendications précédentes, comprenant en outre :
un lecteur (21) pour lire ledit dosimètre individuel de rayonnement, ledit lecteur étant adapté pour déterminer des valeurs représentatives de la dose collectée par chacun desdits au moins deux détecteurs de rayonnement ionisant.

12. Système de dosimétrie individuelle de rayonnement selon l'une quelconque des revendications précédentes, dans lequel le dispositif de traitement est programmé pour calculer la combinaison linéaire prédéterminée des valeurs pour obtenir une estimation de dose efficace, dans lequel l'estimation de dose efficace a un effet-dose par unité de kerma de l'air par rapport à une onde de photon plane ayant une distribution d'énergie correspondant à N-100 et qui est arrivée sur le dosimètre se propageant suivant la direction de référence, qui est supérieur ou égal à 1,2 fois l'effet-dose par unité de kerma d'air par rapport à une onde de photon plane ayant une distribution d'énergie correspondant à N-80.

13. Système de dosimétrie individuelle de rayonnement selon l'une quelconque des revendications précédentes, dans lequel le dispositif de traitement est programmé pour calculer la combinaison linéaire prédéterminée des valeurs pour obtenir une estimation de dose efficace, dans lequel l'estimation de dose efficace a un effet-dose par unité de kerma de l'air par rapport à une onde de photon plane ayant une distribution d'énergie correspondant à N-100, et qui est arrivée sur le dosimètre se propageant suivant la direction de référence, qui est supérieur ou égal à 1,1 fois l'effet-dose par unité de kerma de l'air par rapport à une onde de photon plane ayant une distribution d'énergie correspondant à N-120, et qui est arrivée sur le dosimètre se propageant suivant la direction de référence.

14. Procédé de dosimétrie individuelle de rayonnement pour estimer une dose efficace d'un humain adulte portant un vêtement radioprotecteur, le procédé comprenant,

- le positionnement d'au moins deux détecteurs de rayonnement ionisant sur une surface extérieure du vêtement radioprotecteur tandis qu'il est porté, les au moins deux détecteurs de rayonnement ionisant ayant des effet-doses différents en fonction d'une énergie de photon et d'un angle d'incidence de rayonnement par rapport à une direction de référence dirigée vers le corps de l'adulte humain,

le procédé comprenant en outre

- la détection d'un rayonnement ionisant par ces détecteurs de rayonnement ionisant et la détermination de valeurs représentatives de la dose collectée par chacun des au moins deux détecteurs de rayonnement ionisant, et **caractérisé par**
- l'estimation avec un dispositif de traitement d'une dose efficace reçue par l'humain adulte en calculant une combinaison linéaire prédéterminée desdites valeurs représentatives de la dose, la combinaison linéaire prédéterminée des effet-doses des au moins deux détecteurs de rayonnement ionisant correspondant à une estimation dans la plage de 40 % à 160 % de la dose efficace reçue par l'humain adulte dans chacune d'une pluralité de conditions d'exposition de référence, la dose efficace pour chacune de la pluralité de conditions d'exposition de référence étant déterminée expérimentalement ou par des simulations,

dans lequel ladite pluralité de conditions d'exposition de référence comprend au moins une exposition à une onde de photon plane se propageant dans la direction de référence, une exposition à une onde de photon plane se propageant suivant une direction à un angle de 45° par rapport à la direction de référence et une exposition à une onde de photon plane se propageant suivant une direction à un angle de 60° par rapport à la direction de référence, et dans lequel chacune de ces ondes de photon planes présente une distribution d'énergie correspondant à l'une de ce qui suit :

une qualité de rayonnement de rayons X pouvant être obtenue par une tension de crête de tube à rayons X de 80 kV et filtrée par 0,50 mm de Cu et 4,00 mm d'Al, cette qualité de rayonnement de rayons X correspondant au spectre large de rayons X W-80 tel que défini par la norme ISO 4037-1,
une qualité de rayonnement de rayons X pouvant être obtenue par une tension de crête de tube à rayons X de 60 kV et filtrée par 0,60 mm de Cu et 4,00 mm d'Al, cette qualité de rayonnement de rayons X correspondant au spectre étroit de rayons X N-60 tel que défini par la norme ISO 4037-1, et
une qualité de rayonnement de rayons X pouvant être obtenue par une tension de crête de tube à rayons X de 60 kV et filtrée par 0,30 mm de Cu et 4,00 mm d'Al, cette qualité de rayonnement de rayons X correspondant au spectre large de rayons X tel que W-60 défini par la norme ISO 4037-1.

15. Procédé selon la revendication 14, dans lequel le calcul de la combinaison linéaire prédéterminée des valeurs comprend le calcul d'une estimation de dose efficace ayant un effet-dose par unité de kerma de l'air par rapport à une onde de photon plane ayant une distribution d'énergie correspondant à N-100 et qui est arrivée sur les détecteurs se propageant suivant la direction de référence, qui est supérieur ou égal à 1,1 fois l'effet-dose par unité de kerma de l'air par rapport à une onde de photon plane ayant une distribution d'énergie correspondant à N-120 et qui est arrivée sur les détecteurs se propageant suivant la direction de référence.

**FIG. 1 – PRIOR ART**

**FIG. 2 – PRIOR ART**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

FIG. 14

FIG. 15

**FIG. 16**

**FIG. 17**

**FIG. 18**

**FIG. 19**

**FIG. 20**

**FIG. 21**

EP 3 286 581 B1

**FIG. 22**

**FIG. 23**

45

**FIG. 24**

**FIG. 25**

**FIG. 26**

**FIG. 27**

280

281

282

**FIG. 28**

Pb (0.42 mm)

Al (3 mm)

Ti (0.3 mm)

Al (3.9 mm)

Cu (2 mm)

W (0.5 mm)

Y (cm)

0.5

Pb (0.42 mm)

Al (3 mm)

Ti (0.3 mm)

0

Al (3.9 mm)

TLD 2

W (0.5 mm)

Cu (2 mm)

-0.5

-2.0  -1.5    -1.0  -0.5    0    0.5   1.0   1.5   2.0    X (cm)

**FIG. 29**

**FIG. 30**

**FIG. 31**

**FIG. 32**

**FIG. 33**

**FIG. 34**

**FIG. 35**

**FIG. 36**

**FIG. 37**

**FIG. 38**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÄRVINEN et al.** Comparison of double dosimetry algorithms for estimating the effective dose in occupational dosimetry of interventional radiology staff. *Radiation Protection Dosimetry,* vol. 131, 1